# EUROPEAN PATENT APPLICATION

(11) **EP 4 825 893 A1**
(43) Date of publication of application: **21.10.2026**
(21) Application number: 24903788.8
(22) Date of filing: 13.12.2024
(51) Int. Cl.: C08G 63/16, C08L 67/00, C08L 67/02

(54) **ALIPHATIC POLYESTER, RESIN COMPOSITION, MOLDED OBJECT, METHOD FOR PRODUCING ALIPHATIC POLYESTER, BLOCK COPOLYMER, RESIN COMPOSITION, AND MOLDED OBJECT**

(30) Priority: 13.12.2023 JP 2023210653
(71) Applicant: Kuraray Co., Ltd., Kurashiki-shi, Okayama 710-0801 (JP)
(72) Inventor: IMAMATSU Masaya, Tsukuba-shi, Ibaraki 305-0841 (JP); TAKAI Junya, Kamisu-shi, Ibaraki 314-0197 (JP); MOTODA Satoshi, Tsukuba-shi, Ibaraki 305-0841 (JP); KONISHI Hiroyuki, Tsukuba-shi, Ibaraki 305-0841 (JP)
(74) Representative: D Young & Co LLP
(86) International application number: PCT/JP2024/044189
(87) International publication number: WO 2025/127135

(57) **Abstract**

The present invention relates to an aliphatic polyester containing a structural unit (a1) derived from an aliphatic diol having an alkyl group as a branched chain and 3 or more carbon atoms in a main chain and a structural unit (a2) derived from an aliphatic dicarboxylic acid, and satisfying specific conditions; a resin composition containing the aliphatic polyester and a molded object thereof; a method for producing an aliphatic polyester having a specific structure and satisfying specific conditions; a block copolymer having a specific structure and satisfying specific conditions; a resin composition containing the block copolymer and a molded object thereof; and a method for producing a block copolymer having a specific structure and satisfying specific conditions (the specific structures and the specific conditions are as described in the description).

## Description

### Technical Field

The present invention relates to an aliphatic polyester, a resin composition, a molded object, a method for producing an aliphatic polyester, a block copolymer, a resin composition, and a molded object.

### Background Art

PTLs 1 to 4 disclose an aliphatic polyester or block copolymerization containing a block derived from an aliphatic polyester.

Specifically, PTL 1 describes a method for producing a polyester in which an aliphatic dicarboxylic acid and/or an aliphatic dicarboxylic acid anhydride and a diol compound and/or a cyclic ether compound are allowed to react with each other under a specific condition, to obtain a low-molecular-weight polyester and the obtained low-molecular-weight polyester is heated under reduced pressure, resulting in an increase in molecular weight (Claim 1).

PTL 2 discloses a polyester resin that is a block copolymer containing a polylactic acid unit and a polyester unit as main components and is characterized by being a stereocomplex (Claim 1). Furthermore, PTL 2 discloses the use of a soft segment having a theoretical molecular weight of 10,000 (10k) to 22,000 (22k) (Table 1) in Examples as a soft segment used in formation of a stereocomplex of polylactic acid and copolymerization with polylactic acid from the viewpoint of achieving both heat resistance and mechanical physical properties of polylactic acid (paragraph [0008]).

PTL 3 discloses a block copolymer containing a specific polylactic acid segment and a polyester segment other than the polylactic acid segment as a resin for toner to provide a toner having excellent low-temperature fixation and heat-resistant storage (paragraph [0003], and Claim 1). PTL 3 discloses that a polyester constituting the polyester segment is obtained by a reaction of a polyhydric alcohol component with a polyvalent carboxylic acid component such as a polyvalent carboxylic acid, a polyvalent carboxylic acid anhydride, or a polyvalent carboxylic acid ester (paragraphs [0016] and [0021]).

PTL 4 relates to a method for producing a high-molecular-weight aliphatic polyester having a low branching degree, and describes that in a second step after an esterification reaction of a first step, the molecular weight is increased by a polycondensation reaction (a reaction of removing glycol) at a reaction temperature of 220 to 250°C using a biaxial continuous polymerization reactor (Claim 2 and paragraph [0043]).

### Citation List

### Patent Literature

PTL 1: JP 2004-300200 A
PTL 2: JP 2011-153275 A
PTL 3: JP 2015-169881 A
PTL 4: JP 2006-274253 A

### Summary of Invention

### Technical Problem

PTL 1 describes that the technology described in PTL 1 achieves an increase in molecular weight of an aliphatic polyester resin under a specific production condition.

However, PTL 1 does not specifically disclose whether an increase in molecular weight can be achieved when an aliphatic diol having an alkyl group as a branched chain is used. In addition, a number-average molecular weight is not confirmed.

PTL 2 describes copolymerization of polylactic acid (paragraph [0012]), but does not describe an increase in molecular weight of a soft segment used in copolymerization of polylactic acid. Furthermore, since PTL 2 describes that the molecular weight of an aliphatic polyester (the soft segment) used in Examples is at most 22,000, the technology described in PTL 2 does not teach or suggest a further increase in molecular weight of an aliphatic polyester.

In PTL 3, a polyester segment is simply introduced into a resin for toner from the viewpoint of the low-temperature fixation and heat-resistant storage of toner. This shows that PTL 3 only discloses that a polyester constituting the polyester segment is obtained by a publicly known method. Furthermore, PTL 3 describes that the molecular weight is limited when an amorphous polylactic acid is obtained through dehydration condensation of lactic acid, as the necessity of obtaining a block copolymer through ring-opening polymerization of lactide (paragraph [0010]). This shows that in the technology described in PTL 4, the molecular weight achieved through ring-opening polymerization of lactide is sufficient. Accordingly, the technology described in PTL 3 does not require a further increase in molecular weight of the polyester constituting the polyester segment. Moreover, PTL 3 describes that use of a branched saturated aliphatic saturated aliphatic diol as a raw material for the polyester segment is undesired since the crystallinity of an aliphatic crystalline polyester reduces to reduce the melting point.

The technology described in PTL 4 is obtained in view of the problems (paragraph [0005]) in that an increase in molecular weight using a coupling agent (chain extending agent) that is a diisocyanate complicates a production process. Therefore, PTL 4 proposes a technology different from the technology using a coupling agent (chain extending agent). Accordingly, the technology proposed in PTL 4 is not sufficiently investigated as the technology using a coupling agent (chain extending agent).

On the other hand, when a further increase in molecular weight can be achieved with respect to the above-mentioned aliphatic polyester resin, for example, further modifying a resin such as polylactic acid, and specifically, imparting impact resistance derived from the soft segment, and the like are expected. However, providing an alternative technology different from the technology described in PTL 4 is not easy. For example, since the technology using a coupling agent (chain extending agent) also has a possibility of causing a side reaction as taught by PTL 4, the alternative technology cannot be provided by simple trial and error.

Furthermore, since an increase in molecular weight of an aliphatic polyester and an increase in terminal OH group ratio of an aliphatic polyester tend to have a trade-off relationship, it is conventionally difficult to obtain an aliphatic polyester having a high terminal OH group ratio and a high molecular weight.

In view of the above-mentioned problems, a first object of the present invention is to provide an aliphatic polyester having a high terminal OH group ratio and a high molecular weight and a method for producing the same; and a resin composition containing the aliphatic polyester, and a molded object thereof.

A second object of the present invention is to provide a block copolymer with imparted properties derived from the aliphatic polyester having a high terminal OH group ratio and a high molecular weight; and a resin composition containing the block copolymer, and a molded object thereof.

The properties derived from the aliphatic polyester having a high terminal OH group ratio and a high molecular weight more specifically represent properties capable of providing a resin composition that suppresses a reduction in heat resistance of any polyester resin (excluding the aliphatic polyester and the block copolymer) and has imparted impact resistance by adding the aliphatic polyester or the block copolymer to the polyester resin, and a molded object thereof.

### Solution to Problem

In order to solve the above-mentioned problems, the inventors of the present invention have intensively studied a relationship between the terminal OH group ratio and number-average molecular weight of an aliphatic polyester, and as a result, found that when a specific condition is satisfied, an aliphatic polyester having a high terminal OH group ratio and a high molecular weight and a method for producing the same can be provided. Thus, the present invention has been completed. The aliphatic polyester having a high terminal OH group ratio and a high molecular weight and the method for producing the same can be provided, and therefore a resin composition containing the aliphatic polyester and a molded object thereof can be provided. Furthermore, a block copolymer having a block derived from the aliphatic polyester, a resin composition containing the block copolymer, and a molded object thereof can be provided.

Specifically, the present invention provides the following.
[1] An aliphatic polyester containing a structural unit (a1) derived from an aliphatic diol having an alkyl group as a branched chain and 3 or more carbon atoms in a main chain and a structural unit (a2) derived from an aliphatic dicarboxylic acid, the aliphatic polyester satisfying three conditions: a condition 1(PE), a condition 2(PE), and a condition 3(PE).

Condition 1(PE): α(PE) and β(PE) below satisfy a relational expression (I) below. $α \left(PE\right) / \left(150-β\left(PE\right)\right) \geq 500$ (I)

In the relational expression (I), α(PE) is a number-average molecular weight of the aliphatic polyester, and β(PE) is a terminal OH group ratio (mol%) of the aliphatic polyester, and represents a ratio (percentage) of the number of terminal OH groups when a total number of terminal groups of the aliphatic polyester is 100 mol%.

Condition 2(PE): in the aliphatic polyester, a sum (M(a)) of an average formula weight (M(a1)) of a moiety of the structural unit (a1) and an average formula weight (M(a2)) of a moiety of the structural unit (a2) is within a range of 25,000 to 75,000. $β \left(PE\right) \geq 25$
[2] The aliphatic polyester according to [1], in which the aliphatic diol has 3 or more and 10 or less carbon atoms in the main chain.
[3] The aliphatic polyester according to [1] or [2], in which the branched chain of the aliphatic diol is a methyl group.
[4] The aliphatic polyester according to any one of [1] to [3], in which the aliphatic dicarboxylic acid has 4 or more and 12 or less carbon atoms.
[5] A resin composition containing the aliphatic polyester according to any one of [1] to [4].
[6] The resin composition according to [5], further containing a polyester resin (D) different from the aliphatic polyester.
[7] A molded object of the resin composition according to [5] or [6].
[8] A method for producing an aliphatic polyester by allowing a first aliphatic polyester containing a structural unit (a1) derived from an aliphatic diol having an alkyl group as a branched chain and 3 or more carbon atoms in a main chain and a structural unit (a2) derived from a first aliphatic dicarboxylic acid, and at least one selected from the group consisting of a second aliphatic dicarboxylic acid (z1), an aliphatic dicarboxylic acid alkyl ester (z2), and an aliphatic dicarboxylic acid anhydride (z3) to react with each other, to produce a second aliphatic polyester satisfying three conditions: a condition 1(PE2), a condition 2(PE2), and a condition 3(PE2).

Condition 1(PE2): α(PE2) and β(PE2) below satisfy a relational expression (II) below. $α \left(PE2\right) / \left(150-β\left(PE2\right)\right) \geq 500$ (II)

In the relational expression (II), α(PE2) is a number-average molecular weight of the second aliphatic polyester, and β(PE2) is a terminal OH group ratio (mol%) of the second aliphatic polyester, and represents a ratio (percentage) of the number of terminal OH groups when a total number of terminal groups of the aliphatic polyester is 100 mol%.

Condition 2(PE2): a sum (M(a)) of an average formula weight (M(a1)) of a moiety of the structural unit (a1) and an average formula weight (M(a2)) of a moiety of the structural unit (a2) in the second aliphatic polyester is within a range of 25,000 to 75,000. $β \left(PE2\right) \geq 25$
[9] The method for producing an aliphatic polyester according to [8], the method including: a first step of allowing the aliphatic diol having an alkyl group as a branched chain and 3 or more carbon atoms in a main chain and the first aliphatic dicarboxylic acid to react with each other to produce the first aliphatic polyester; and a second step of allowing the first aliphatic polyester and at least one selected from the group consisting of the second aliphatic dicarboxylic acid (z1), the aliphatic dicarboxylic acid alkyl ester (z2), and the aliphatic dicarboxylic acid anhydride (z3) to react with each other.
[10] A block copolymer containing a first block (A) derived from an aliphatic polyester containing a structural unit (a1) derived from an aliphatic diol having an alkyl group as a branched chain and 3 or more carbon atoms in a main chain and a structural unit (a2) derived from an aliphatic dicarboxylic acid, and a second block (B) derived from a polylactic acid containing a structural unit derived from lactic acid, the block copolymer satisfying three conditions: a condition 1(BCP), a condition 2(BCP), and a condition 3(BCP).

Condition 1(BCP): α(BCP) and β(BCP) below satisfy a relational expression (III) below. $α \left(BCP\right) / \left(150-β\left(BCP\right)\right) \geq 575$ (III)

In the relational expression (III), α(BCP) is a number-average molecular weight of the block copolymer, and β(BCP) is a terminal OH group ratio (mol%) of the block copolymer, and represents a ratio (percentage) of the number of terminal OH groups when the total number of terminal groups of the block copolymer is 100 mol%.

Condition 2(BCP): a sum (M(a)) of an average formula weight (M(a1)) of a moiety of the structural unit (a1) and an average formula weight (M(a2)) of a moiety of the structural unit (a2) in the block copolymer is within a range of 25,000 to 75,000. $β \left(BCP\right) \geq 25$
[11] The block copolymer according to [10], in which the aliphatic diol has 3 or more and 10 or less carbon atoms in the main chain.
[12] The block copolymer according to [10] or [11], in which the branched chain of the aliphatic diol is a methyl group.
[13] The block copolymer according to any one of [10] to [12], in which the aliphatic dicarboxylic acid has 4 or more and 12 or less carbon atoms.
[14] The block copolymer according to any one of [10] to [13], the block copolymer having a number-average molecular weight of 28,750 or more and 400,000 or less.
[15] The block copolymer according to any one of [10] to [14], in which a content of the block (B) is 5 mass% or more and 95 mass% or less when a sum of the block (A) and the block (B) is 100 mass%.
[16] A resin composition containing the block copolymer according to any one of [10] to [15].
[17] The resin composition according to [16], further containing a polyester resin (D).
[18] A molded object of the resin composition according to [16] or [17].
[19] A method for producing a block copolymer, the block copolymer containing a first block (A) derived from an aliphatic polyester containing a structural unit (a1) derived from an aliphatic diol having an alkyl group as a branched chain and 3 or more carbon atoms in a main chain and a structural unit (a2) derived from an aliphatic dicarboxylic acid, and a second block (B) derived from a polylactic acid containing a structural unit derived from lactic acid, and satisfying three conditions: a condition 1(BCP), a condition 2(BCP), and a condition 3(BCP).

Condition 1(BCP): α(BCP) and β(BCP) below satisfy a relational expression (III) below. $α \left(BCP\right) / \left(150-β\left(BCP\right)\right) \geq 575$ (III)

In the relational expression (III), α(BCP) is a number-average molecular weight of the block copolymer, and β(BCP) is a terminal OH group ratio (mol%) of the block copolymer, and represents a ratio (percentage) of the number of terminal OH groups when the total number of terminal groups of the block copolymer is 100 mol%.

Condition 2(BCP): a sum (M(a)) of an average formula weight (M(a1)) of a moiety of the structural unit (a1) and an average formula weight (M(a2)) of a moiety of the structural unit (a2) in the block copolymer is within a range of 25,000 to 75,000. $β \left(BCP\right) \geq 25$

In the method, the second block (B) derived from a polylactic acid containing a structural unit derived from lactic acid is formed on the first block (A) derived from the aliphatic polyester produced by allowing a first aliphatic polyester containing the structural unit (a1) and the structural unit (a2) and at least one selected from the group consisting of a second aliphatic dicarboxylic acid (z1), an aliphatic dicarboxylic acid alkyl ester (z2), and an aliphatic dicarboxylic acid anhydride (z3) to react with each other, through direct condensation of lactic acid or ring-opening polymerization of lactide so that the second block (B) is bonded to the first block (A).

### Advantageous Effects of Invention

According to an aspect of the present invention, an aliphatic polyester having a high terminal OH group ratio and a high molecular weight and a method for producing the same; a resin composition containing the aliphatic polyester, and a molded object thereof can be provided.

According to an aspect of the present invention, a block copolymer having imparted properties derived from the aliphatic polyester having a high terminal OH group ratio and a high molecular weight; a resin composition containing the block copolymer, and a molded object thereof can be provided.

The properties derived from the aliphatic polyester having a high terminal OH group ratio and a high molecular weight more specifically represent properties capable of providing a resin composition that suppresses a reduction in heat resistance of any polyester resin (excluding the aliphatic polyester and the block copolymer) and has imparted impact resistance by adding the aliphatic polyester or the block copolymer to the polyester resin, and a molded object thereof.

### Brief Description of Drawings

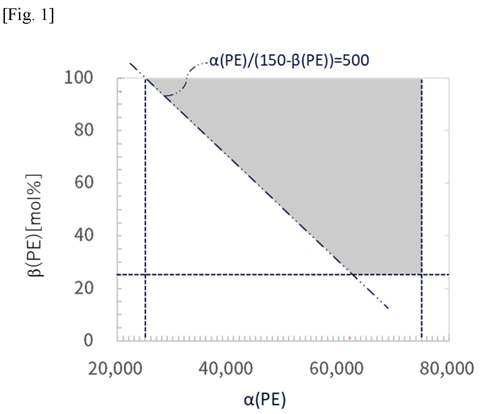

[Fig. 1] Fig. 1 is a graph schematically showing a relationship between the total formula weight α(PE) and terminal OH group ratio β(PE) of an aliphatic polyester.

### Description of Embodiments

Hereinafter, the present invention will be described on the basis of an example of embodiments of the present invention. However, embodiments described below are examples for embodying the technical idea of the present invention, and the present invention is not limited to the following description.

The present description shows preferred aspects of embodiments, but a combination of two or more of individual preferred aspects is also a preferred aspect. Regarding the matters indicated by the numerical ranges, when there are several numerical ranges, it is possible to selectively combine the lower limit value and upper limit value of the numerical ranges to obtain a preferred embodiment. When there is a description of a numerical range of "XX to YY," it means "XX or more and YY or less."

In the present description, a "main chain" of a polymer means the longest molecular chain of a polymer molecule unless otherwise specified.

### [Aliphatic Polyester]

An aliphatic polyester according to an embodiment of the present invention is an aliphatic polyester containing a structural unit (a1) derived from an aliphatic diol having an alkyl group as a branched chain and 3 or more carbon atoms in a main chain and a structural unit (a2) derived from an aliphatic dicarboxylic acid, and satisfying three conditions: a condition 1(PE), a condition 2(PE), and a condition 3(PE). In the present description, an aliphatic polyester is also referred to as "PE."

In the present description, a "terminal OH group" represents an end of the molecular chain of the molecular structure of a polymer, and preferably a hydroxy group at an end of the main chain of a polymer.

In the present description, a "terminal COOH group" represents an end of the molecular chain of the molecular structure of a polymer, and preferably a carboxy group at an end of the main chain of a polymer.

In the present description, when the "terminal group" is simply described (when the term "terminal group" or "whole terminal group" is used, but not terminal OH group or terminal COOH group), it represents both a functional group and a terminal OH group in a polymer that are determined for an acid value measured by a method described in Examples. In an aspect of the present invention, the functional group determined for an acid value measured by the method described in Examples is preferably a terminal COOH group.

In the present description, the explanation as to "an effect that can suppress a reduction in heat resistance of any polyester resin and impart impact resistance" specifically represents an effect that can suppress a reduction in heat resistance of a resultant resin composition and impart impact resistance by adding an aliphatic polyester (PE) that is an aspect of the present invention or a block copolymer (BCP) that is an aspect of the present invention described below to any polyester resin unless specified otherwise. The above-mentioned polyester resin represents a resin other than the aliphatic polyester (PE) and the block copolymer (BCP).

Condition 1(PE): α(PE) and β(PE) described below satisfy the following relational expression (I): $α \left(PE\right) / \left(150-β\left(PE\right)\right) \geq 500$ (I)

In the relational expression (I), α(PE) is the number-average molecular weight of the aliphatic polyester, and β(PE) is the terminal OH group ratio (mol%) of the aliphatic polyester, and represents the ratio (percentage) of the number of terminal OH groups when the total number of terminal groups of the aliphatic polyester is 100 mol%.

Condition 2(PE): the sum (M(a)) of the average formula weight (M(a1)) of a moiety of the structural unit (a1) and the average formula weight (M(a2)) of a moiety of the structural unit (a2) in the aliphatic polyester is within a range of 25,000 to 75,000. $β \left(PE\right) \geq 25$

The value of the relational expression (I) that is 500 or more represents that the aliphatic polyester tends to have a high terminal OH group ratio (mol%) relative to the number-average molecular weight α(PE) thereof. In general, when the number-average molecular weight of a polymer obtained in a polymerization reaction is to be increased, a possibility of causing a side reaction is increased, the ratio of the terminal OH group of the resultant polymer is reduced, and the value of the relational expression (I) tends to become less than 500. On the other hand, the aliphatic polyester according to the present embodiment has a high molecular weight with the terminal OH group ratio maintained to be high. Such an aliphatic polyester can be produced, for example, by a method for producing an aliphatic polyester described below.

According to the present invention, an aliphatic polyester having a high terminal OH group ratio and a high molecular weight can be provided. Therefore, the aliphatic polyester can be expected to have excellent properties when a block copolymer is produced, and particularly contribute to an increase in molecular weight of the block copolymer. Furthermore, the aliphatic polyester according to the present embodiment contributes to an increase in molecular weight of a block copolymer, and therefore the heat resistance of the block copolymer can be improved. Moreover, the aliphatic polyester according to the present embodiment forms a soft block in the block copolymer, and therefore impact resistance can be imparted, for example. According to the present invention, the aliphatic polyester having a high terminal OH group ratio and a high molecular weight can be provided. Therefore, when a resin composition containing any polyester resin is prepared, the properties of the aliphatic polyester according to the present embodiment can be imparted, and for example, heat resistance and impact resistance can be imparted. More specifically, a reduction in heat resistance of the polyester resin can be suppressed, and impact resistance can be imparted.

### (Structural Unit (a1))

The structural unit (a1) contained in the aliphatic polyester according to the present embodiment is a structural unit derived from an aliphatic diol (a1-1) having an alkyl group as a branched chain and 3 or more carbon atoms in a main chain. The aliphatic diol (a1-1) constituting the structural unit (a1) may be one aliphatic diol or two or more aliphatic diols.

### (Aliphatic Diol (a1-1))

The aliphatic diol (a1-1) is an aliphatic diol having an alkyl group as a branched chain and 3 or more carbon atoms in a main chain. The aliphatic diol has two hydroxy groups. The two hydroxy groups of the aliphatic diol (a1-1) are preferably primary hydroxy groups. The "primary hydroxy group" represents a hydroxy group to be bonded to a primary atom, and preferably a primary carbon atom. It is preferable that the hydroxy groups of the aliphatic diol (a1-1) be not bonded to a branched chain end.

The "main chain" of the aliphatic diol (a1-1) represents a partial structure that is a molecular chain having two hydroxy groups (preferably two primary hydroxy groups) in the molecule as both ends, and a plurality of atoms, and preferably carbon atoms that link the two primary hydroxy groups. Therefore, it is preferable that two primary hydroxy groups in the aliphatic diol (a1-1) be positioned at both ends of the "main chain" of the aliphatic diol (a1-1). In other words, it is preferable that the aliphatic diol (a1-1) have a hydroxy group at both ends of the main chain. This facilitates a reaction with dicarboxylic acid.

When the total number of carbon atoms in the main chain and carbon atoms in the branched chain of the aliphatic diol (a1-1) is 4 or more, the hydrolysis resistance of the aliphatic polyester tends to be excellent. From the viewpoint of achieving further excellent hydrolysis resistance, the total number of carbon atoms in the main chain and carbon atoms in the branched chain of the aliphatic diol (a1-1) is preferably 5 or more, and more preferably 6 or more. From the viewpoint of the biodegradability of the aliphatic polyester, the total number of carbon atoms in the main chain and carbon atoms in the branched chain of the aliphatic diol (a1-1) is preferably 30 or less, more preferably 25 or less, still more preferably 10 or less, and even still more preferably 9 or less. The lower limit values and the upper limit values described in a stepwise manner may be combined each independently as described above. For example, in an aspect of the present invention, the total number of carbon atoms in the main chain and carbon atoms in the branched chain of the aliphatic diol (a1-1) is preferably 4 to 30, more preferably 4 to 25, still more preferably 5 to 10, still more preferably 5 to 9, and even still more preferably 6 to 9.

The number of carbon atoms in the main chain of the aliphatic diol (a1-1) is preferably 4 or more, and more preferably 5 or more, and preferably 10 or less, more preferably 9 or less, and still more preferably 8 or less. The lower limit values and the upper limit values described in a stepwise manner may be combined each independently as described above. For example, in an aspect of the present invention, the number of carbon atoms in the main chain of the aliphatic diol (a1-1) is preferably 3 to 10, more preferably 3 to 9, still more preferably 4 to 9, still more preferably 4 to 8, and even still more preferably 5 to 8.

The aliphatic diol (a1-1) has an alkyl group as a branched chain as described above. With this configuration, the biodegradability and hydrolysis resistance of the aliphatic polyester can be achieved as compared with a case where an aliphatic diol having no alkyl group as a branched chain is used.

Furthermore, the number of branched chain in one molecule of the aliphatic diol (a1-1) is preferably one or two, and more preferably one. The number of carbon atoms of the branched chain is preferably 1 to 6, more preferably 1 to 3, and still more preferably 1 to 2. In an aspect, the number of carbon atoms of the branched chain is preferably equal to or less than the number of carbon atoms in the main chain, and more preferably less than the number of carbon atoms in the main chain. The branched chain is preferably at least one selected from the group consisting of a methyl group, an ethyl group, and a propyl group, more preferably at least one selected from a methyl group and an ethyl group, and still more preferably a methyl group. When the aliphatic diol (a1-1) has a plurality of branched chains, the branched chains may be the same as or different from each other.

Examples of the aliphatic diol (a1-1) include 2-methyl-1,3-propanediol, 2,2-dimethyl-1,3-propanediol, 2-ethyl-1,3-propanediol, 2-ethyl-2-methyl-1,3-propanediol, 2-methyl-1,4-butanediol, 1,2-pentanediol, 1,3-pentanediol, 2,3-pentanediol, 2,4-pentanediol, 2-methyl-2,4-pentanediol, 1,4-pentanediol, 2-methyl-1,5-pentanediol, 3-methyl-1,5-pentanediol (hereinafter also referred to as "MPD"), 2-methyl-2,4-pentanediol, 2-ethyl-1,5-pentanediol, 2,4-dimethyl-1,5-pentanediol, 2,4-diethyl-1,5-pentanediol, 1,2-hexanediol, 1,3-hexanediol, 1,4-hexanediol, 1,5-hexanediol, 2-ethyl-1,6-hexanediol, and 2-methyl-1,8-octanediol. The aliphatic diol (a1-1) is preferably at least one selected from the group consisting of 2-methyl-1,3-propanediol, 3-methyl-1,5-pentanediol, and 2,4-diethyl-1,5-pentanediol, and more preferably 3-methyl-1,5-pentanediol.

### (Structural Unit (a2))

The structural unit (a2) contained in the aliphatic polyester according to the present embodiment is a structural unit derived from an aliphatic dicarboxylic acid (a2-1). The aliphatic dicarboxylic acid (a2-1) constituting the structural unit (a2) may be one aliphatic dicarboxylic acid or two or more aliphatic dicarboxylic acids.

### (Aliphatic Dicarboxylic Acid (a2-1))

The number of carbon atoms of the aliphatic dicarboxylic acid (a2-1) is not limited as long as the effects of the present invention are not impaired. Meanwhile, from the viewpoint of the hydrolysis resistance of the aliphatic polyester, the number of carbon atoms of the aliphatic dicarboxylic acid (a2-1) is preferably 4 or more, more preferably 5 or more, and still more preferably 6 or more. From the viewpoint of the biodegradability of the aliphatic polyester, the number of carbon atoms of the aliphatic dicarboxylic acid (a2-1) is preferably 12 or less, more preferably 10 or less, and still more preferably 8 or less. The lower limit values and the upper limit values described in a stepwise manner may be combined each independently as described above. For example, in an aspect of the present invention, the number of carbon atoms of the aliphatic dicarboxylic acid (a2-1) is preferably 4 to 12, more preferably 5 to 10, and still more preferably 6 to 8.

Examples of the aliphatic dicarboxylic acid (a2-1) include succinic acid, glutaric acid, adipic acid (hereinafter also referred to as "AA"), pimelic acid, suberic acid, azelaic acid, sebacic acid, undecanedioic acid, and decanedicarboxylic acid. The aliphatic dicarboxylic acid (a2-1) is preferably at least one selected from the group consisting of succinic acid, adipic acid, and sebacic acid, and more preferably adipic acid.

### (Preferable Combination of Aliphatic Diol (a1-1) and Aliphatic Dicarboxylic Acid (a2-1))

From the viewpoint of exhibiting further excellent biodegradability and hydrolysis resistance of the aliphatic polyester, one selected from the group consisting of a combination of 2-methyl-1,3-propanediol and succinic acid, a combination of 3-methyl-1,5-pentanediol and succinic acid, a combination of 2,4-diethyl-1,5-pentanediol and succinic acid, a combination of 2-methyl-1,3-propanediol and adipic acid, a combination of 3-methyl-1,5-pentanediol (MPD) and adipic acid (AA), and a combination of 2,4-diethyl-1,5-pentanediol and adipic acid is an example of preferred embodiments, one selected from the group consisting of a combination of 3-methyl-1,5-pentanediol and succinic acid, a combination of 2,4-diethyl-1,5-pentanediol and succinic acid, a combination of 3-methyl-1,5-pentanediol and adipic acid, and a combination of 2,4-diethyl-1,5-pentanediol and adipic acid is an example of more preferred embodiments, and a combination of 3-methyl-1,5-pentanediol and adipic acid is an example of further preferred embodiments.

### (Other Structural Unit (a'))

The aliphatic polyester according to the present embodiment may or may not contain a structural unit (a') other than the structural unit (a1) and the structural unit (a2).

A monomer capable of forming the structural unit (a') is not particularly limited as long as the effects of the present invention are not impaired. Examples of the monomer include an aliphatic diol having no alkyl group as a branched chain and 3 or more carbon atoms in a main chain, an aliphatic diol having 2 or less carbon atoms in a main chain, an aromatic diol, an aromatic dicarboxylic acid, a hydroxycarboxylic acid, a dicarboxylic acid anhydride, and a cyclic ester compound. In particular, a suitable example is at least one selected from the group consisting of ethylene glycol, propylene glycol, L-lactide, D-lactide, DL-lactide, and meso-lactide.

The content ratio of the structural unit (a') in the aliphatic polyester is preferably 50 mass% or less, more preferably 30 mass% or less, still more preferably 20 mass% or less, still more preferably 15 mass% or less, and even still more preferably 10 mass% or less. The content ratio of the structural unit (a') may be, for example, 0 mass% or more or 0.1 mass% or more. The lower limit values and the upper limit values described in a stepwise manner may be combined each independently. For example, in an aspect of the present invention, the content ratio of the structural unit (a') in the aliphatic polyester may be preferably 0 to 50 mass%, more preferably 0 to 30 mass%, still more preferably 0 to 20 mass%, still more preferably 0 to 15 mass%, and even still more preferably 0 to 10 mass%. When the aliphatic polyester contains the structural unit (a'), the content ratio of the structural unit (a') in the aliphatic polyester is preferably 0.1 to 50 mass%, more preferably 0.1 to 30 mass%, still more preferably 0.1 to 20 mass%, still more preferably 0.1 to 15 mass%, and even still more preferably 0.1 to 10 mass%.

### (Ratio of Aliphatic Diol (a1-1) and Aliphatic Dicarboxylic Acid (a2-1))

The preparation molar ratio [aliphatic diol (a1-1)/aliphatic dicarboxylic acid (a2-1)] when the aliphatic diol (a1-1) and the aliphatic dicarboxylic acid (a2-1) are allowed to react with each other is preferably 1.4/1.0 to 1.0/1.4, more preferably 1.2/1.0 to 1.0/1.2, and still more preferably 1.2/1.0 to 1.0/1.0. When the molar ratio is such a molar ratio that the ratio of the aliphatic diol (a1-1) is lower than the ratio of the aliphatic dicarboxylic acid (a2-1), it is preferable that the monomer capable of forming the structural unit (a') be prepared so that the OH group equivalent is more than the COOH group equivalent from the viewpoint of obtaining an aliphatic polyester having a high terminal OH group ratio.

### (Structure of Aliphatic Polyester)

The aliphatic polyester according to the present embodiment preferably has a polyester structure in which the structural unit (a1) and the structural unit (a2) are alternately bonded to each other. When the aliphatic polyester has such a polyester structure, the sum (M(a)) of the average formula weight (M(a1)) of a moiety of the structural unit (a1) and the average formula weight (M(a2)) of a moiety of the structural unit (a2) in the aliphatic polyester can be generally regarded as the number-average molecular weight Mn(PE) of the aliphatic polyester. In the present embodiment, the polyester structure is preferably a structure having an OH group at both ends from the viewpoint of easily obtaining the effect that can suppress a reduction in heat resistance of any polyester resin and impart impact resistance. The structure having an OH group at both ends refers to a structure in which both ends of the polyester structure are OH groups derived from an aliphatic diol or a monomer capable of forming the structural unit (a'), and preferably refers to a structure in which both ends of the polyester structure are OH groups derived from an aliphatic diol. However, the polyester structure is not necessarily limited to the structure having an OH group at both ends, and may be a structure having a terminal COOH group at one or both of the ends. A first example in which the polyester structure is the structure having a terminal COOH group is a polyester structure derived from an aliphatic carboxylic acid and having a COOH group at an end, and a second example is a polyester structure derived from a side reaction and having a COOH group at an end. In an aspect of the present embodiment, for example, when the amount of moles of the end of the polyester structure is 200, the amount of moles of the structure having an OH group at both ends is 50 mol or more, and is preferably higher than the total amount of moles of the structure having a terminal COOH group according to the first example and the structure having a terminal COOH group according to the second example.

### (Condition 1(PE), Condition 2(PE), and Condition 3(PE))

Fig. 1 is a graph schematically showing a relationship between the total formula weight α(PE) and terminal OH group ratio β(PE) of an aliphatic polyester.

From the results of investigation by the present inventors, it has been found that a trade-off relationship tends to be exhibited in which an increase in molecular weight of an aliphatic polyester (e.g., a number-average molecular weight of 25,000 or more) tends to reduce the ratio of the structure having an OH group at both ends in the polyester structure, whereas retention of a high ratio of the structure having an OH group at both ends cannot achieve the increase in molecular weight of the aliphatic polyester. This relationship is represented by a straight line (double-dot chain line) of α(PE)/(150 - β(PE)) = 500 in the graph of Fig. 1.

In the aliphatic polyester according to the present embodiment, the value of relational expression α(PE)/(150 - β(PE)) in the above-mentioned condition 1(PE) is 500 or more. That is, the aliphatic polyester according to the present embodiment is located in a region at a high molecular weight side than the straight line represented by α(PE)/(150 - β(PE)) = 500 in the graph of Fig. 1.

From the viewpoint of more significantly obtaining the effect that can suppress a reduction in heat resistance of any polyester resin and impart impact resistance, the value of the relational expression (I) is preferably 520 or more, more preferably 540 or more, still more preferably 560 or more, still more preferably 580 or more, and even still more preferably 600 or more.

In an aspect of the present invention, the value of the relational expression (I) is preferably 520 to 1,500, more preferably 540 to 1,500, still more preferably 560 to 1,500, still more preferably 580 to 1,500, and even still more preferably 600 to 1,500.

In an aspect of the present invention, the value of the relational expression (I) is preferably 520 to 1,400, more preferably 540 to 1,400, still more preferably 560 to 1,400, still more preferably 580 to 1,400, and even still more preferably 600 to 1,400.

In an aspect of the present invention, the value of the relational expression (I) is preferably 520 to 1,300, more preferably 540 to 1,300, still more preferably 560 to 1,300, still more preferably 580 to 1,300, and even still more preferably 600 to 1,300.

In an aspect of the present invention, the value of the relational expression (I) is preferably 520 to 1,297, more preferably 540 to 1,297, still more preferably 560 to 1,297, still more preferably 580 to 1,297, and even still more preferably 600 to 1,297.

In an aspect of the present invention, the value of the relational expression (I) is preferably 520 to 1,000, more preferably 540 to 1,000, still more preferably 560 to 1,000, still more preferably 580 to 1,000, and even still more preferably 600 to 1,000.

The above-mentioned condition 2(PE) and condition 3(PE) restrict the range represented by the relational expression (I) of the condition 1(PE).

Specifically, the lower limit value, 25,000, of the sum (M(a)) of the formula weight in the condition 2(PE) corresponds to the lower limit of the number-average molecular weight in which the above-mentioned trade-off relationship is recognized in investigation of an increase in molecular weight. The upper limit value of the sum (M(a)) of the formula weight in the condition 2(PE) represents the upper limit of the number-average molecular weight that can industrially achieve an increase in molecular weight. The molecular movement is reduced with progression of an increase in molecular weight, and therefore the upper limit value is set for industrially necessary energy cost of shear or the like that is applied to stir a reaction liquid.

From the viewpoint of more significantly obtaining the effect that can suppress a reduction in heat resistance of any polyester resin and impart impact resistance, the sum (M(a)) of the formula weight in the condition 2(PE) is preferably 26,000 or more, more preferably 27,000 or more, still more preferably 28,000 or more, still more preferably 29,000 or more, still more preferably 30,000 or more, and even still more preferably 32,000 or more. Among these, from the viewpoint of achieving impact resistance and heat resistance suitable for a composition with a polyester resin (D), the sum (M(a)) of the formula weight in the condition 2(PE) is preferably 26,000 or more, more preferably 27,000 or more, still more preferably 28,000 or more, and even still more preferably 29,000 or more. From the viewpoint of moldability and processability, the sum (M(a)) of the formula weight is preferably 70,000 or less, and more preferably 65,000 or less.

The lower limit values and the upper limit values described in a stepwise manner may be combined each independently as described above. For example, in an aspect of the present invention, the sum (M(a)) of the formula weight in the condition 2(PE) is preferably 26,000 to 75,000, more preferably 27,000 to 70,000, still more preferably 28,000 to 70,000, still more preferably 28,000 to 65,000, still more preferably 29,000 to 65,000, still more preferably 30,000 to 65,000, and even still more preferably 32,000 to 65,000.

The sum (M(a)) of the formula weight can be regarded as the number-average molecular weight of the aliphatic polyester as described above. The number-average molecular weight of a polymer can be measured, for example, by GPC. Specifically, the number-average molecular weight can be measured in accordance with a method described in the section of Examples described below.

### (Glass Transition Temperature Tg(PE) of Aliphatic Polyester)

The glass transition temperature Tg(PE) of the aliphatic polyester according to the present embodiment is not particularly limited, and is preferably -80°C or more and -15°C or less. When the glass transition temperature is within the above-mentioned numerical range, a resin composition containing the aliphatic polyester and a molded object of the resin composition containing the aliphatic polyester tend to have excellent impact resistance.

From the viewpoint of easily achieving satisfactory low-temperature properties such as impact resistance at a low temperature in the resin composition containing the aliphatic polyester and the molded object of the resin composition containing the aliphatic polyester, the glass transition temperature Tg(PE) of the aliphatic polyester is more preferably -20°C or less, and still more preferably -25°C or less, and may be -30°C or less or -35°C or less.

From the viewpoint of easily achieving satisfactory low-temperature impact resistance in the resin composition containing the aliphatic polyester and the molded object of the resin composition containing the aliphatic polyester, the glass transition temperature Tg(PE) of the aliphatic polyester is preferably lower. On the other hand, the glass transition temperature Tg(PE) of the aliphatic polyester may be, for example, -75°C or more, -70°C or more, or -65°C or more.

The lower limit values and the upper limit values described in a stepwise manner may be combined each independently as described above. For example, in an aspect of the present invention, the glass transition temperature Tg(PE) of the aliphatic polyester is preferably -80°C to -15°C, more preferably -80°C to -20°C, still more preferably -80°C to -25°C, still more preferably -80°C to -30°C, and even still more preferably -80°C to -35°C, and may be, for example, -75°C to -35°C, -70°C to -35°C, or -65°C to -35°C.

The glass transition temperature of the aliphatic polyester can be determined, for example, by differential scanning calorimetry.

From the viewpoint of obtaining the intended effects of the present invention, the terminal OH group ratio β(PE) in the condition 3(PE) is 25 mol% or more. The upper limit value of β(PE) is 100 mol%. The upper limit value of β(PE) may be, for example, 99.9 mol%. From the viewpoint of more significantly obtaining the intended effects of the present invention, β(PE) is preferably 30 mol% or more, more preferably 35 mol% or more, still more preferably 40 mol% or more, still more preferably 45 mol% or more, still more preferably 50 mol% or more, and even still more preferably 60 mol% or more. β(PE) may be 65 mol% or more or 70 mol% or more.

The lower limit values and the upper limit values described in a stepwise manner may be combined each independently as described above. For example, in an aspect of the present invention, the terminal OH group ratio β(PE) in the condition 3(PE) is preferably 25 to 100 mol%, more preferably 30 to 100 mol%, still more preferably 35 to 100 mol%, still more preferably 40 to 100 mol%, still more preferably 45 to 100 mol%, still more preferably 50 to 100 mol%, and even still more preferably 60 to 100 mol%, and may be, for example, 65 to 100 mol% or 70 to 100 mol%.

For example, in an aspect of the present invention, the terminal OH group ratio β(PE) in the condition 3(PE) is preferably 25 to 99.9 mol%, more preferably 30 to 99.9 mol%, still more preferably 35 to 99.9 mol%, still more preferably 40 to 99.9 mol%, still more preferably 45 to 99.9 mol%, still more preferably 50 to 99.9 mol%, and even still more preferably 60 to 99.9 mol%, and may be, for example, 65 to 99.9 mol% or 70 to 99.9 mol%.

The terminal OH group ratio β(PE) in the condition 3(PE) can be measured by a method described in the section of Examples described below.

### (Terminal COOH Group Ratio of Aliphatic Polyester))

The terminal COOH group ratio (mol%) of the aliphatic polyester according to the present embodiment is the ratio (percentage) of the number of terminal COOH groups when the total number of terminal groups of the aliphatic polyester is 100 mol%. The terminal COOH group is generated when the end of the polyester structure is derived from an aliphatic dicarboxylic acid. The terminal COOH group may be generated as a result of a side reaction when an aliphatic polyester is obtained by polymerization. From the viewpoint of easily obtaining the intended effects of the present invention, the terminal COOH group ratio of the aliphatic polyester according to the present embodiment is preferably 75 mol% or less, more preferably 70 mol% or less, still more preferably 65 mol% or less, still more preferably 60 mol% or less, still more preferably 55 mol% or less, still more preferably 50 mol% or less, and even still more preferably 40 mol% or less, and may be, for example, 35 mol% or less or 30 mol% or less. The lower limit value of the terminal COOH group ratio of the aliphatic polyester may be 0 mol% or 0.1 mol%.

The lower limit values and the upper limit values described in a stepwise manner may be combined each independently as described above. For example, in an aspect of the present invention, the terminal COOH group ratio of the aliphatic polyester is preferably 0 to 75 mol%, more preferably 0 to 70 mol%, still more preferably 0 to 65 mol%, still more preferably 0 to 60 mol%, still more preferably 0 to 55 mol%, still more preferably 0 to 50 mol%, and even still more preferably 0 to 40 mol%, and may be, for example, 0 to 35 mol% or 0 to 30 mol%.

For example, in an aspect of the present invention, the terminal COOH group ratio of the aliphatic polyester is preferably 0.1 to 75 mol%, more preferably 0.1 to 70 mol%, still more preferably 0.1 to 65 mol%, still more preferably 0.1 to 60 mol%, still more preferably 0.1 to 55 mol%, still more preferably 0.1 to 50 mol%, and even still more preferably 0.1 to 40 mol%, and may be, for example, 0.1 to 35 mol% or 0.1 to 30 mol%.

The terminal COOH group ratio of the aliphatic polyester can be measured by a method described in the section of Examples described below.

The sum of the terminal OH group ratio β(PE) (mol%) and the terminal COOH group ratio (mol%) of the aliphatic polyester is 100 mol% or less, and may be 25 to 100 mol% or 25 to 99.9 mol%.

### (Sum of Contents of Structural Unit (a1) and Structural Unit (a2))

From the viewpoint of easily obtaining the effect that can suppress a reduction in heat resistance of any polyester resin and impart impact resistance, the sum of the contents of the structural unit (a1) and the structural unit (a2) in the aliphatic polyester according to the present embodiment is preferably 50 mass% or more, more preferably 75 mass% or more, still more preferably 85 mass% or more, and even still more preferably 90 mass% or more, and may be, for example, 92 mass% or more or 95 mass% or more. In an aspect, the sum may be 100 mass%.

The lower limit values and the upper limit values described in a stepwise manner may be combined each independently as described above. For example, in an aspect of the present invention, the sum of the contents of the structural unit (a1) and the structural unit (a2) in the aliphatic polyester is preferably 50 to 100 mass%, more preferably 75 to 100 mass%, still more preferably 85 to 100 mass%, and even still more preferably 90 to 100 mass%, and may be, for example, 92 to 100 mass% or 95 to 100 mass%.

### (Imparting Properties)

### (Imparting Properties to Block Copolymer)

When a block copolymer is formed from the aliphatic polyester according to the present embodiment, the properties of the aliphatic polyester can be imparted to a molded object of the block copolymer or a resin composition containing the block copolymer. For example, since the aliphatic polyester according to the present embodiment has a higher molecular weight, an increase in molecular weight of a resultant block copolymer can be achieved. Therefore, for example, heat resistance can be imparted to the molded object of the block copolymer. In addition, since the aliphatic polyester according to the present embodiment has a high terminal OH group ratio despite a high molecular weight, a high triblock copolymer ratio of a block copolymer formed can be achieved. In combination with the high molecular weight, the resultant block copolymer has excellent mechanical properties, and the molded object of the resin composition containing the block copolymer has high impact resistance. Here, the triblock copolymer ratio refers to, when the aliphatic polyester according to the present embodiment is a first block, the ratio (percentage) of the number of the triblock copolymer with respect to the total number of the triblock copolymer in which a second block is bonded to both ends of the first block, and a diblock copolymer in which the second block is bonded to only one of the ends of the first block and is not bonded to the other. The aliphatic polyester according to the present embodiment can form a soft segment derived from the aliphatic polyester in the resultant block copolymer. With this configuration, for example, impact resistance can be imparted to the molded object of the block copolymer.

### (Imparting Properties to Resin Composition)

When a resin composition is formed from the aliphatic polyester according to the present embodiment, the properties of the aliphatic polyester can be imparted to a molded object of the resin composition. For example, since the aliphatic polyester according to the present embodiment has a high molecular weight, heat resistance can be imparted to the molded object of the resin composition. Since the aliphatic polyester according to the present embodiment has an amorphous soft molecular chain derived from an aliphatic diol having a specific branched structure in the main chain of the molecular structure, for example, impact resistance can be imparted to the molded object of the resin composition.

### [Method for Producing Aliphatic Polyester]

A method for producing the aliphatic polyester according to the embodiment of the present invention is a method for producing an aliphatic polyester by allowing a first aliphatic polyester containing a structural unit (a1) derived from an aliphatic diol having an alkyl group as a branched chain and 3 or more carbon atoms in a main chain and a structural unit (a2) derived from a first aliphatic dicarboxylic acid, and at least one selected from the group consisting of a second aliphatic dicarboxylic acid (z1), an aliphatic dicarboxylic acid alkyl ester (z2), and an aliphatic dicarboxylic acid anhydride (z3) to react with each other, to produce a second aliphatic polyester satisfying three conditions: a condition 1(PE2), a condition 2(PE2), and a condition 3(PE2).

Condition 1(PE2): α(PE2) and β(PE2) below satisfy the following relational expression (II): $α \left(PE2\right) / \left(150-β\left(PE2\right)\right) \geq 500$ (II)

In the relational expression (II), α(PE2) is the number-average molecular weight of the second aliphatic polyester, and β(PE2) is the terminal OH group ratio (mol%) of the second aliphatic polyester, and represents the ratio (percentage) of the number of terminal OH groups when the total number of terminal groups of the aliphatic polyester is 100 mol%.

Condition 2(PE2): the sum (M(a)) of the average formula weight (M(a1)) of a moiety of the structural unit (a1) and the average formula weight (M(a2)) of a moiety of the structural unit (a2) in the second aliphatic polyester is within a range of 25,000 to 75,000. $β \left(PE2\right) \geq 25$

In the present embodiment, the structural unit (a1) and the structural unit (a2) are the same as those described in the embodiment of the aliphatic polyester, and the same applies to suitable aspects thereof. Therefore, the aliphatic diol having an alkyl group as a branched chain and 3 or more carbon atoms in the main chain is the same as the aliphatic diol described in the section of the aliphatic diol (a1-1), and the same applies to suitable aspects thereof. Furthermore, the first aliphatic dicarboxylic acid is also the same as the aliphatic dicarboxylic acid described in the section of the aliphatic dicarboxylic acid (a2-1), and the same applies to suitable aspects thereof. The first aliphatic polyester is a precursor (raw material) of the second aliphatic polyester. The second aliphatic polyester is the same as those described in the section of the aliphatic polyester according to the embodiment of the present invention, and the same applies to suitable aspects thereof. Therefore, the condition 1(PE2) and α(PE2) and β(PE2), the condition 2(PE2), and the condition 3(PE2) are the same as the condition 1(PE) and α(PE) and β(PE), the condition 2(PE), and the condition 3(PE), respectively, described in the embodiment of the aliphatic polyester, and the same applies to suitable aspects thereof.

According to the method according to the present embodiment, the aliphatic polyester having a high terminal OH group ratio and a high molecular weight can be provided, and therefore the same effects as the effect described in the embodiment of the aliphatic polyester can be obtained.

### (Second Aliphatic Dicarboxylic acid (z1), Aliphatic Dicarboxylic Acid Alkyl Ester (z2), and Aliphatic Dicarboxylic Acid Anhydride (z3))

The second aliphatic dicarboxylic acid (z1), the aliphatic dicarboxylic acid alkyl ester (z2), and the aliphatic dicarboxylic acid anhydride (z3) described above can function as a coupling agent or a chain extending agent during the reaction. The second aliphatic dicarboxylic acid (z1), the aliphatic dicarboxylic acid alkyl ester (z2), and the aliphatic dicarboxylic acid anhydride (z3) may form the same structural unit as the structural unit (a2) as a result of the reaction. In this case, a structural unit derived from one or more selected from the group consisting of the second aliphatic dicarboxylic acid (z1), the aliphatic dicarboxylic acid alkyl ester (z2), and the aliphatic dicarboxylic acid anhydride (z3) is also regarded as the structural unit (a2) derived from the first aliphatic dicarboxylic acid. When the second aliphatic dicarboxylic acid (z1), the aliphatic dicarboxylic acid alkyl ester (z2), and the aliphatic dicarboxylic acid anhydride (z3) form the same structural unit as the structural unit (a2), a high molecular weight can be achieved without complicating the structural unit of the first aliphatic polyester. The second aliphatic dicarboxylic acid (z1), the aliphatic dicarboxylic acid alkyl ester (z2), and the aliphatic dicarboxylic acid anhydride (z3) may form a structural unit different from the structural unit (a2) as a result of the reaction. In this case, properties derived from the structural unit different from the structural unit (a2) can be imparted to the second aliphatic polyester.

### (Second Aliphatic Dicarboxylic Acid (z1))

Examples of the second aliphatic dicarboxylic acid (z1) include succinic acid, glutaric acid, adipic acid, pimelic acid, suberic acid, azelaic acid, sebacic acid, undecanedioic acid, and decanedicarboxylic acid. The second aliphatic dicarboxylic acid (z1) is preferably at least one selected from the group consisting of succinic acid, adipic acid, and sebacic acid, and more preferably adipic acid.

### (Aliphatic Dicarboxylic Acid Alkyl Ester (z2))

Examples of the aliphatic dicarboxylic acid alkyl ester (z2) include succinic acid diester, glutaric acid diester, adipic acid diester, pimelic acid diester, suberic acid diester, azelaic acid diester, sebacic acid diester, undecanedioic acid diester, and decanedicarboxylic acid diester. The aliphatic dicarboxylic acid alkyl ester (z2) is preferably at least one selected from the group consisting of dimethyl adipate, diethyl adipate, dipropyl adipate, diisopropyl adipate, dibutyl adipate, diisobutyl adipate, bis(2-ethylhexyl) adipate, dioctyl adipate, heptylnonyl adipate, diisononyl adipate, diisodecyl adipate, and bis(2-butoxyethyl) adipate, and more preferably dimethyl adipate or bis(2-ethylhexyl) adipate.

### (Aliphatic Dicarboxylic Acid Anhydride (z3))

Examples of the aliphatic dicarboxylic acid anhydride (z3) include succinic anhydride, glutaric anhydride, adipic anhydride, pimelic anhydride, suberic anhydride, azelaic anhydride, sebacic anhydride, undecanedioic anhydride, and decanedicarboxylic anhydride.

The method for producing an aliphatic polyester according to the embodiment of the present invention preferably includes two-stage steps.

Specifically, the method for producing an aliphatic polyester according to the embodiment of the present invention includes a first step of allowing the aliphatic diol having an alkyl group as a branched chain and 3 or more carbon atoms in the main chain and the first aliphatic dicarboxylic acid to react with each other to produce the first aliphatic polyester containing the structural unit (a1) and the structural unit (a2), and a second step of allowing the first aliphatic polyester and at least one selected from the group consisting of the second aliphatic dicarboxylic acid (z1), the aliphatic dicarboxylic acid alkyl ester (z2), and the aliphatic dicarboxylic acid anhydride (z3) to react with each other.

### (Catalyst used in First Step)

In the first step, a catalyst is preferably used, and an esterification catalyst is more preferably used.

Examples of the esterification catalyst include a titanium catalyst, tin octylate, tin chloride, and tin oxide. An example of the titanium catalyst is at least one selected from tetraisopropyl orthotitanate and potassium titanium oxalate dihydrate. In an aspect, tin octylate is used in the first step. From the viewpoint of increasing the polymerization rate, at least one selected from tetraisopropyl orthotitanate and potassium titanium oxalate dihydrate may be used in the first step.

### (Reaction Condition in First Step)

As a reaction condition in the first step, specifically, a polycondensation temperature and a polycondensation pressure, the same condition as the condition of a publicly known esterification reaction can be adopted. In examples of the reaction condition in the first step, the polycondensation temperature is preferably within the range of 140 to 230°C, and the polycondensation pressure is preferably within the range of full vacuum (FV) to 2,000 Pa, more preferably FV to 1,000 Pa, still more preferably FV to 500 Pa, still more preferably FV to 300 Pa, and even still more preferably FV to 200 Pa. The polycondensation pressure may be, for example, 5 to 2,000 Pa, 5 to 1,000 Pa, 5 to 500 Pa, 5 to 300 Pa, 5 to 200 Pa, 40 to 2,000 Pa, 40 to 1,000 Pa, 40 to 500 Pa, 40 to 300 Pa, or 40 to 200 Pa.

### (Catalyst used in Second Step)

In the second step, a catalyst is preferably used, and an esterification catalyst is more preferably used.

Examples of the esterification catalyst include a titanium catalyst, tin octylate, tin chloride, and tin oxide. An example of the titanium catalyst is at least one selected from tetraisopropyl orthotitanate and potassium titanium oxalate dihydrate. For example, from the viewpoint of increasing the polymerization rate, at least one selected from tetraisopropyl orthotitanate and potassium titanium oxalate dihydrate may be used in the second step.

### (Reaction Condition in Second Step)

A reaction condition that can be adopted in the second step is preferably a reaction condition similar to that in the first step. From the viewpoint of reducing manufacturing cost and reducing a side reaction during the reaction, a lower reaction temperature and a higher polycondensation pressure than the conventional polycondensation condition of polycondensation in one stage may be adopted as the reaction condition that can be adopted in the second step.

In specific examples of the reaction condition, the polycondensation temperature in the second step is preferably within the range of 140 to 230°C, and the polycondensation pressure in the second step is preferably within the range of full vacuum (FV) to 500 Pa.

From the viewpoint of reducing a side reaction other than a condensation reaction, the polycondensation temperature in the second step is more preferably 220°C or less, and still more preferably 200°C or less. Furthermore, the ranges described in a stepwise manner may be combined each independently. For example, in an aspect of the present invention, the polycondensation temperature in the second step is preferably 140 to 230°C, more preferably 140 to 220°C, and still more preferably 140 to 200°C.

From the viewpoint of reducing a reaction time and from the viewpoint of obtaining a high-molecular-weight polymer, the polycondensation pressure in the second step is more preferably 300 Pa or less, still more preferably 200 Pa or less, and even still more preferably 100 Pa or less. For example, in an aspect of the present invention, the polycondensation pressure in the second step is preferably FV to 500 Pa, more preferably FV to 300 Pa, still more preferably FV to 200 Pa, and even still more preferably FV to 100 Pa. The polycondensation pressure may be, for example, 5 to 500 Pa, 5 to 300 Pa, 5 to 200 Pa, or 5 to 100 Pa.

### [Resin Composition (Aliphatic Polyester-containing Resin Composition)]

An aliphatic polyester-containing resin composition according to an embodiment of the present invention contains the aliphatic polyester (PE) according to the above-mentioned embodiment (in the present description, the "aliphatic polyester (PE)" represents at least one selected from the aliphatic polyester described in the section of Aliphatic Polyester according to an embodiment of the present invention described above, and the second aliphatic polyester produced by the method described in the section of Method for Producing Aliphatic Polyester according to an embodiment of the present invention described above), and preferably contains an aliphatic polyester (PE), and a polyester resin (hereinafter also referred to as polyester resin (D) for the sake of convenience) that is different from the aliphatic polyester (PE) and is different from a block copolymer (BCP) that is an aspect of the present invention described below. The aliphatic polyester (PE) may be the second aliphatic polyester obtained by the method for producing an aliphatic polyester according to the above-mentioned embodiment. As the polyester resins (D), one kind of polyester resin may be used alone, or two or more kinds thereof may be used in combination. According to the present embodiment, the resin composition contains the aliphatic polyester (PE), and therefore the properties of the aliphatic polyester (PE) can be imparted to a molded object of the resin composition. Specifically, this can contribute to modification of the polyester resin (D).

A resin composition containing the aliphatic polyester (PE) according to an embodiment of the present invention may or may not contain a block copolymer (BCP) according to an embodiment of the present invention described below.

### (Polyester Resin (D))

As the polyester resin (D) contained in the aliphatic polyester-containing resin composition according to the present embodiment, any polyester resin can be used. However, in the present embodiment, the aliphatic polyester (PE) according to the embodiment and a block copolymer that is an aspect of the present invention described below are excluded from the polyester resin (D). As the polyester resin (D), for example, a polyester resin requiring modification of one or both of heat resistance and impact resistance may be used. In the present embodiment, the polyester resin (D) is preferably at least one selected from the group consisting of a biomass resin and a biodegradable resin from the viewpoint of biodegradability.

Examples of the polyester resin (D) include polylactic acid (PLA), polycaprolactone (PCL), poly(caprolactone/butylene succinate) (PCLBS), polybutylene succinate (PBS), poly(butylene succinate/adipate) (PBSA), poly(butylene succinate/carbonate) (PEC), poly(ethylene terephthalate/succinate) (PETS), poly(butylene adipate/terephthalate) (PBAT), poly(tetramethylene adipate/terephthalate) (PTMT), polyethylene succinate (PES), polyglycolic acid (PGA), polyethylene furanoate (PFE), polyhydroxyalkanoate (PHA) (e.g., polyhydroxybutyrate (PHB) and polyhydroxybutyrate valerate (PHBV)), and copolymers thereof.

From the viewpoint of exerting further excellent hydrolysis resistance, heat resistance, impact resistance, and biodegradability, the polyester resin (D) is preferably at least one selected from the group consisting of PLA, PBS, PBSA, and PBAT, and more preferably at least one polylactic acid-based resin selected from the group consisting of PLA and a copolymer thereof.

When the polylactic acid-based resin is used as the polyester resin (D), the polylactic acid-based resin is at least one selected from the group consisting of a homopolymer of L-lactic acid, a homopolymer of D-lactic acid, a copolymer of L-lactic acid and D-lactic acid, a homopolymer of DL-lactic acid, a copolymer of DL-lactic acid and L-lactic acid, a copolymer of DL-lactic acid and D-lactic acid, and polymers of L-lactide, D-lactide, DL-lactide, and meso-lactide that are cyclic dimers of lactic acid.

The polylactic acid-based resin may be a copolymer of lactic acid and at least one selected from another aliphatic hydroxycarboxylic acid other than lactic acid, an aliphatic dicarboxylic acid, an aliphatic diol, and an aromatic dicarboxylic acid. The content of a structural unit derived from lactic acid in the copolymer in 100 mol% of the whole amount of structural units constituting the copolymer that is the polylactic acid-based resin is preferably 70 mol% or more, more preferably 80 mol% or more, and still more preferably 90 mol% or more, and may be 99 mol% or less.

The lower limit values and the upper limit values described in a stepwise manner may be combined each independently as described above. For example, in an aspect of the present invention, the content of a structural unit derived from lactic acid in the copolymer in 100 mol% of the whole amount of structural units constituting the copolymer that is the polylactic acid-based resin is preferably 70 to 99 mol%, more preferably 80 to 99 mol%, and still more preferably 90 to 99 mol%.

Among the copolymers described above, the polylactic acid-based resin is preferably the homopolymer of L-lactic acid, the homopolymer of D-lactic acid, or the copolymer of L-lactic acid and D-lactic acid, and more preferably the homopolymer of L-lactic acid.

One kind of the polylactic acid-based resins may be used alone, or two or more kinds thereof may be used.

As the polylactic acid-based resin, a commercially available product may be used. Examples of the commercially available product include "product name INGEO (registered trademark) series" manufactured by NatureWorks LLC., "product name Luminy (registered trademark) series" manufactured by TotalEnergies Corbion Ltd., "Revode (registered trademark)" series manufactured by Zhejiang Hisun Biomaterials Co., Ltd, and "product name SUPLA" manufactured by SUPLA Material Technology Co., Ltd.

From the viewpoint of impact resistance and heat resistance, the weight-average molecular weight (Mw) of the polyester resin (D) is preferably 50,000 or more, more preferably 100,000 or more, and still more preferably 150,000 or more, and from the viewpoint of molding processability and compatibility with an aliphatic polyester, it is preferably 600,000 or less, more preferably 550,000 or less, and still more preferably 500,000 or less. That is, the weight-average molecular weight (Mw) of the polylactic acid-based resin (D) is preferably 50,000 to 600,000, more preferably 100,000 to 550,000, and still more preferably 150,000 to 500,000.

The weight-average molecular weight (Mw) of the polylactic acid-based resin can be determined in terms of standard polystyrene by gel permeation chromatography (GPC) measurement. When the commercially available product is used, a value listed in the catalog may be used.

### (Content Ratio of Polyester Resin (D))

The aliphatic polyester-containing resin composition of the present embodiment contains the polyester resin (D) preferably in an amount of 50.0 to 99.5 mass%, more preferably 60.0 to 99.0 mass%, still more preferably 70.0 to 98.5 mass%, and even still more preferably 80.0 to 98.0 mass% with respect to 100 mass% of the sum of the aliphatic polyester (PE) and the polyester resin (D). In the case of the above-mentioned content ratio, the properties of the aliphatic polyester (PE) can be imparted to a molded object of the resin composition containing the aliphatic polyester (PE) without largely impairing the properties of the polyester resin (D).

### (Content Ratio of Aliphatic Polyester (PE))

In an embodiment of the aliphatic polyester-containing resin composition, the content of the aliphatic polyester (PE) is preferably 0.5 to 50.0 mass%, more preferably 1.0 to 40.0 mass%, still more preferably 1.5 to 30.0 mass%, still more preferably 2.0 to 20.0 mass%, still more preferably 2.0 to 15.0 mass%, and even still more preferably 2.0 to 10.0 mass% with respect to 100 mass% of the whole amount of the aliphatic polyester-containing resin composition.

In an embodiment of the aliphatic polyester-containing resin composition, the aliphatic polyester-containing resin composition contains the aliphatic polyester (PE) preferably in an amount of 0.5 to 50.0 mass%, more preferably 1.0 to 40.0 mass%, still more preferably 1.5 to 30.0 mass%, still more preferably 2.0 to 20.0 mass%, still more preferably 2.0 to 15.0 mass%, and even still more preferably 2.0 to 10.0 mass% with respect to 100 mass% of the sum of the aliphatic polyester (PE) and the polyester resin (D). The above-mentioned content ratios are preferred since the effect that can suppress a reduction in heat resistance of any polyester resin and impart impact resistance is sufficiently easily obtained.

The total content ratio of the aliphatic polyester (PE) and the polyester resin (D) in the aliphatic polyester-containing resin composition of the present embodiment is preferably 80 mass% or more, more preferably 85 mass% or more, still more preferably 90 mass% or more, still more preferably 95 mass% or more, and even still more preferably 98 mass% or more with respect to 100 mass% of the whole amount of the aliphatic polyester-containing resin composition. The total content ratio of the aliphatic polyester (PE) and the polyester resin (D) in the resin composition of the present embodiment may be 100 mass% or less with respect to 100 mass% of the whole amount of the aliphatic polyester-containing resin composition. The lower limit values and the upper limit values described in a stepwise manner may be combined each independently as described above. For example, in an aspect of the present invention, the total content ratio of the aliphatic polyester (PE) and the polyester resin (D) is preferably 80 to 100 mass%, more preferably 85 to 100 mass%, still more preferably 90 to 100 mass%, still more preferably 95 to 100 mass%, and even still more preferably 98 to 100 mass% with respect to 100 mass% of the whole amount of the aliphatic polyester-content resin composition.

The above-mentioned content ratios are preferred since the effects of the present invention are more significantly exerted.

### (Other Components)

The aliphatic polyester-containing resin composition of the present embodiment may contain another component that is at least one selected from the group consisting of: a plasticizer other than the aliphatic polyester (PE), a block copolymer (BCP) according to an embodiment of the present invention described below, and the polyester resin (D); a resin other than the polyester resin (D); and another additive.

### (Plasticizer)

The aliphatic polyester-containing resin composition may contain a plasticizer for the purpose of adjusting the aliphatic polyester-containing resin composition to a viscosity suitable for molding or for the purpose of obtaining a molded article having a desired hardness. The plasticizer is not particularly limited, and may be a plasticizer having biodegradability in any environment of an industrial compost, a domestic compost, soil, and the ocean. Suitable examples of the plasticizer having biodegradability include plant-derived esters such as rapeseed oil and castor oil; synthetic esters such as triacetin, diethyl phthalate, and triethyl citrate; polyols such as ethylene glycol and trimethylolpropane, and derivatives thereof; and saccharides such as sorbitol. One kind of the plasticizers may be used alone, or two or more kinds thereof may be used in combination.

### (Resin other than Polyester Resin (D))

The resin other than the polyester resin (D) is not particularly limited, and may be a resin having biodegradability in any environment of an industrial compost, a domestic compost, soil, and the ocean. Suitable examples of the resin having biodegradability include polyvinyl alcohol, cellulose resins such as cellulose acetate; starch and an esters thereof; 4-nylon; and a block copolymer (BCP) according to an embodiment of the present invention described below. One kind of the resins may be used alone, or two or more kinds thereof may be used in combination.

### (Additive)

Examples of the additive include an inorganic filler, a softener, a thermal antiaging agent, an antioxidant, a hydrolysis inhibitor, a light stabilizer, an antistat, a release agent, a flame retardant, a foaming agent, a pigment, a dye, a brightener, an ultraviolet absorber, a lubricant, and a solvent. One kind of the additives may be used alone, or two or more kinds thereof may be used in combination.

When the additive is used, the content of the additive in the aliphatic polyester-containing resin composition may be appropriately determined according to desired physical properties of the aliphatic polyester-containing resin composition.

### (Method for Producing Aliphatic Polyester-containing Resin Composition)

A method for producing an aliphatic polyester-containing resin composition of the present embodiment is not particularly limited, and the aliphatic polyester (PE) and the polyester resin (D), and if necessary, at least one selected from the group consisting of the plasticizer other than the polyester resin (D), the resin other than the polyester resin (D), and the additive may be uniformly mixed.

Examples of a method for mixing the components include a melt-kneading method using a single-screw extruder, a multi-screw extruder, a Banbury mixer, a heating roll, Brabender, or various kneaders. When the above-mentioned device is used, the components may be subjected to a melt-kneading method in which the components are collectively supplied from a single supply port, or a method in which different components or mixtures are each supplied from separate supply ports and melt-kneaded. Before putting into the supply port, part or all of the components may be pre-blended in advance as described below, and the mixture may be put into the supply port.

Before melt-kneading, the components may be pre-blended. Examples of a preblending method include a method using a mixer such as a Henschel mixer, a high-speed mixer, a V blender, a ribbon blender, a tumbler blender, or a conical blender.

In consideration of melting points and decomposition temperatures of the aliphatic polyester (PE) and the polyester resin (D), it is preferable that the temperature during melt-kneading be optionally selected from the range of 140 to 220°C.

### (Properties of Aliphatic Polyester-containing Resin Composition)

### (Impact Resistance)

For example, when the aliphatic polyester-containing resin composition according to the present embodiment is prepared in the form of a resin composition containing a polyester resin, preferably a resin composition containing a polyester resin (D), a molded object thereof tends to exhibit excellent impact resistance. For example, it is preferable that an impact resistance value (kJ/m²) measured in the section of Examples described below be a value higher than the impact resistance value of the polyester resin.

### (Heat Resistance)

For example, when the aliphatic polyester-containing resin composition according to the present embodiment is prepared in the form of a resin composition containing a polyester resin, preferably a resin composition containing a polyester resin (D), a molded object thereof tends to exhibit excellent heat resistance.

The resin composition according to the other embodiment of the present invention contains the aliphatic polyester (PE) according to the above-mentioned embodiment, and may not contain the polyester resin (D) other than the aliphatic polyester (PE). According to the other embodiment, the resin composition containing the aliphatic polyester (PE) or a molded object thereof can exhibit the properties of the aliphatic polyester (PE).

### [Molded Object]

A molded object according to an embodiment of the present invention is a molded object of the aliphatic polyester-containing resin composition according to the above-mentioned embodiment. A molded object according to the yet other embodiment is a molded object of the resin composition according to the other embodiment (the aliphatic polyester-containing resin composition containing no polyester resin (D)). According to these embodiments, the properties of the aliphatic polyester (PE) can be exhibited.

### [Block Copolymer]

A block copolymer according to an embodiment of the present invention is a block copolymer containing a first block (A) derived from an aliphatic polyester containing a structural unit (a1) derived from an aliphatic diol having an alkyl group as a branched chain and 3 or more carbon atoms in a main chain and a structural unit (a2) derived from an aliphatic dicarboxylic acid, and a second block (B) derived from a polylactic acid containing a structural unit derived from lactic acid, and satisfying three conditions: a condition 1(BCP), a condition 2(BCP), and a condition 3(BCP). In the present description, the block copolymer is also referred to as "BCP."

Condition 1(BCP): α(BCP) and β(BCP) described below satisfy the following relational expression (III): $α \left(BCP\right) / \left(150-β\left(BCP\right)\right) \geq 575$ (III) In the relational expression (III), α(BCP) is the number-average molecular weight of the block copolymer, and β(BCP) is the terminal OH group ratio (mol%) of the block copolymer, and represents the ratio (percentage) of the number of terminal OH groups when the total number of terminal groups of the block copolymer is 100 mol%.

Condition 2(BCP): the sum (M(a)) of the average formula weight (M(a1)) of a moiety of the structural unit (a1) and the average formula weight (M(a2)) of a moiety of the structural unit (a2) in the block copolymer is within a range of 25,000 to 75,000. $β \left(BCP\right) \geq 25$

When the value of the relational expression (III) is 575 or more, a block copolymer in which the properties of the first block (A) derived from the aliphatic polyester are sufficiently reflected can be provided. Specifically, in order to set the value of the relational expression (III) to be 575 or more, it is necessary that the aliphatic polyester forming the first block (A) have a sufficiently high molecular weight as described in the condition 2(BCP). Examples of such a high-molecular-weight aliphatic polyester include the aliphatic polyester according to the above-mentioned embodiment and the aliphatic polyester produced by the method for producing an aliphatic polyester described above. Therefore, the block copolymer according to the present embodiment has properties imparted according to the high molecular weight of the aliphatic polyester.

According to the present embodiment, the block copolymer contains the first block (A) derived from the high-molecular-weight aliphatic polyester satisfying the condition 2(BCP), and therefore the block copolymer having an increased molecular weight irrespective of the formula weight of the second block (B) can be provided. Furthermore, the block copolymer according to the present embodiment has a high molecular weight, and therefore the heat resistance of the block copolymer can be improved. Moreover, the first block (A) forms a soft block in the block copolymer according to the present embodiment, and therefore impact resistance can be imparted, for example. In addition, the block copolymer according to the present embodiment has a high terminal OH group ratio, that is, has a high ratio of a triblock copolymer having the second block at both ends of the first block (A). In combination with the high molecular weight, the block copolymer has excellent mechanical properties, and a resin composition containing the block copolymer has high impact resistance. From the viewpoint of obtaining a satisfactory effect of improving impact resistance, the terminal OH group ratio is 25% or more. According to the present embodiment, the high-molecular-weight block copolymer can be provided. Therefore, when a resin composition containing the block copolymer and any polyester resin is prepared, the properties of the block copolymer according to the present embodiment can be imparted, and for example, heat resistance and impact resistance can be imparted. More specifically, a reduction in heat resistance of the polyester resin can be suppressed, and impact resistance can be improved.

### (Condition 1(BCP), Condition 2(BCP), and Condition 3(BCP))

The condition 1(BCP), the condition 2(BCP), and the condition 3(BCP) described above are set according to the condition 1(PE), the condition 2(PE), and the condition 3(PE) described in the embodiment of the aliphatic polyester. However, since the block copolymer according to the present embodiment contains the second block (B), it is necessary to take the formula weight of a moiety of the second block (B) into consideration. Therefore, the threshold value of the value of the relational expression (III) in the condition 1(BCP) is set to be 575. As illustrated in the section of Examples, when the value of the relational expression is 575 or more, improvement in heat resistance and impact resistance of the resin composition containing the block copolymer or a molded object thereof is recognized.

The value of the relational expression (III) in the condition 1(BCP) is preferably 580 or more, more preferably 590 or more, still more preferably 600 or more, still more preferably 620 or more, still more preferably 650 or more, and even still more preferably 700 or more.

In an aspect of the present invention, the value of the relational expression (III) is preferably 575 to 8,000, more preferably 580 to 8,000, still more preferably 590 to 8,000, still more preferably 600 to 8,000, still more preferably 650 to 8,000, and even still more preferably 700 to 8,000.

In an aspect of the present invention, the value of the relational expression (III) is preferably 575 to 7,272, more preferably 580 to 7,272, still more preferably 590 to 7,272, still more preferably 600 to 7,272, still more preferably 650 to 7,272, and even still more preferably 700 to 7,272.

In an aspect of the present invention, the value of the relational expression (III) is preferably 575 to 4,000, more preferably 580 to 4,000, still more preferably 590 to 4,000, still more preferably 600 to 4,000, still more preferably 650 to 4,000, and even still more preferably 700 to 4,000.

In an aspect of the present invention, the value of the relational expression (III) is preferably 575 to 3,636, more preferably 580 to 3,636, still more preferably 590 to 3,636, still more preferably 600 to 1,250, still more preferably 650 to 3,636, and even still more preferably 700 to 3,636.

In an aspect of the present invention, the value of the relational expression (III) is preferably 575 to 2,000, more preferably 580 to 2,000, still more preferably 590 to 2,000, still more preferably 600 to 2,000, still more preferably 650 to 2,000, and even still more preferably 700 to 2,000.

In an aspect of the present invention, the value of the relational expression (III) is preferably 575 to 1,923, more preferably 580 to 1,923, still more preferably 590 to 1,923, still more preferably 600 to 1,923, still more preferably 650 to 1,923, and even still more preferably 700 to 1,923.

In an aspect of the present invention, the value of the relational expression (III) is preferably 575 to 1,923, more preferably 580 to 1,667, still more preferably 590 to 1,667, still more preferably 600 to 1,667, still more preferably 650 to 1,667, and even still more preferably 700 to 1,667.

In an aspect of the present invention, the value of the relational expression (III) is preferably 575 to 1,000, more preferably 580 to 1,000, still more preferably 590 to 1,000, still more preferably 600 to 1,000, still more preferably 650 to 1,000, and even still more preferably 700 to 1,000.

The suitable range of the sum (M(a)) of the formula weight in the condition 2(BCP) is the same as the suitable range of the sum (M(a)) of the formula weight in the above-mentioned condition 2(PE). In the block copolymer, the sum (M(a)) of the formula weight in the condition 2(BCP) can be determined by the method described in the section of Examples described below. As the sum (M(a)) of the formula weight, the number-average molecular weight α(PE) of the aliphatic polyester used in the production of the block copolymer may be used.

The suitable range of β(BCP) in the condition 3(BCP) tends to be the same as or less than the suitable range of β(PE) in the above-mentioned condition 3(PE). Specifically, β(BCP) is preferably 28 mol% or more, more preferably 33 mol% or more, still more preferably 38 mol% or more, still more preferably 42 mol% or more, still more preferably 45 mol% or more, and even still more preferably 50 mol% or more. From the viewpoint of increasing the impact resistance of the molded object of the resin composition containing the block copolymer, β(BCP) is preferably 50 mol% or more, more preferably 55 mol% or more, still more preferably 60 mol% or more, and even still more preferably 65 mol% or more. β(BCP) may be 70 mol% or more.

The upper limit value of β(BCP) may be, for example, 100 mol%, 98 mol%, 95 mol%, or 90 mol%. The value of β(BCP) tends to be lower than the value of β(PE). This is because a side reaction may occur in the formation of the second block (B).

The lower limit values and the upper limit values described in a stepwise manner may be combined each independently as described above. For example, in an aspect of the present invention, β(BCP) is 25 to 100 mol%, preferably 28 to 100 mol%, more preferably 33 to 100 mol%, still more preferably 38 to 100 mol%, still more preferably 42 to 100 mol%, still more preferably 45 to 100 mol%, still more preferably 50 to 100 mol%, still more preferably 55 to 100 mol%, still more preferably 60 to 100 mol%, and even still more preferably 65 to 100 mol%.

For example, in an aspect of the present invention, β(BCP) is 25 to 98 mol%, more preferably 28 to 98 mol%, still more preferably 33 to 98 mol%, still more preferably 38 to 98 mol%, still more preferably 42 to 98 mol%, still more preferably 45 to 98 mol%, still more preferably 50 to 98 mol%, still more preferably 55 to 98 mol%, still more preferably 60 to 98 mol%, and even still more preferably 65 to 98 mol%. In an aspect of the present invention, β(BCP) may be, for example, 60 to 95 mol%, 60 to 90 mol%, 70 to 100 mol%, 70 to 98 mol%, 70 to 95 mol%, or 70 to 90 mol%.

### (Terminal COOH Group Ratio of Block Copolymer)

The terminal COOH group ratio (mol%) of the block copolymer according to the present embodiment is the ratio (percentage) of the number of terminal COOH groups when the total number of terminal groups of the block copolymer is 100 mol%. The terminal COOH group may be generated as a result of a side reaction when the block copolymer is obtained by polymerization. From the viewpoint of easily obtaining the intended effects of the present invention, the terminal COOH group ratio of the block copolymer according to the present embodiment is preferably 75 mol% or less, more preferably 72 mol% or less, still more preferably 67 mol% or less, still more preferably 62 mol% or less, still more preferably 58 mol% or less, still more preferably 55 mol% or less, still more preferably 50 mol% or less, still more preferably 45 mol% or less, still more preferably 40 mol% or less, and even still more preferably 35 mol% or less, and may be 30 mol% or less. The lower limit value of the terminal COOH group may be 0 mol%, 2 mol%, 5 mol%, or 10 mol%. The terminal COOH group ratio can be measured by a method described in the section of Examples described below. The sum of the terminal OH group ratio β(BCP) (mol%) and the terminal COOH group ratio (mol%) of the block copolymer is 100 mol% or less, and may be 25 to 100 mol%, 25 to 98 mol%, 25 to 95 mol%, or 25 to 90 mol%.

The lower limit values and the upper limit values described in a stepwise manner may be combined each independently as described above. For example, in an aspect of the present invention, the terminal COOH group ratio of the block copolymer is preferably 0 to 75 mol%, more preferably 0 to 72 mol%, still more preferably 0 to 67 mol%, still more preferably 0 to 62 mol%, still more preferably 0 to 58 mol%, still more preferably 0 to 55 mol%, still more preferably 0 to 50 mol%, still more preferably 0 to 45 mol%, still more preferably 0 to 40 mol%, and even still more preferably 0 to 35 mol%, and may be, for example, 0 to 30 mol%.

For example, in an aspect of the present invention, the terminal COOH group ratio of the block copolymer is preferably 2 to 75 mol%, more preferably 2 to 72 mol%, still more preferably 2 to 67 mol%, still more preferably 2 to 62 mol%, still more preferably 2 to 58 mol%, still more preferably 2 to 55 mol%, still more preferably 2 to 50 mol%, still more preferably 2 to 45 mol%, still more preferably 2 to 40 mol%, and even still more preferably 2 to 35 mol%, and may be, for example, 2 to 30 mol%.

In an aspect of the present invention, the terminal COOH group ratio of the block copolymer may be, for example, 5 to 40 mol%, 10 to 40 mol%, 5 to 30 mol%, or 10 to 30 mol%.

### (First Block (A))

The structural unit (a1) and the structural unit (a2) constituting the first block (A) are the same as those in described in the embodiment of the aliphatic polyester or the method for producing an aliphatic polyester described above.

### (Second Block (B))

### [Polylactic Acid Unit (b)]

A main component of the second block (B) is preferably a structural unit derived from polylactic acid (hereinafter also referred to as "polylactic acid unit").

The "main component" means a structural unit having the highest content ratio among structural units of the second block (B). It is preferable that the "main component" be a structural unit having the highest content ratio in mass percentage among the structural units constituting the second block (B).

The content ratio of the polylactic acid unit in the second block (B) is preferably 70 mass% or more, more preferably 80 mass% or more, still more preferably 85 mass% or more, and even still more preferably 90 mass% or more with respect to 100 mass% of the whole amount of the structural units constituting the second block (B), and may be 100 mass%. The upper limit value of the polylactic acid unit contained in the second block (B) is not limited, and is, for example, 100 mass%. The lower limit values and the upper limit values described in a stepwise manner may be combined each independently as described above. For example, in an aspect of the present invention, the content ratio of the polylactic acid unit in the second block (B) is preferably 70 to 100 mass%, more preferably 80 to 100 mass%, still more preferably 85 to 100 mass%, and even still more preferably 90 to 100 mass% with respect to 100 mass% of the whole amount of the structural units constituting the second block (B).

The polylactic acid unit may be formed through direct condensation of lactic acid so as to be bonded to the first block (A), or may be formed through ring-opening polymerization of lactide so as to be bonded to the first block (A). In an aspect of the polylactic acid unit, the polylactic acid unit is formed through ring-opening polymerization of lactide so as to be bonded to the first block (A). A polylactic acid constituting the polylactic acid unit may be prepared through direct condensation of lactic acid or prepared through ring-opening polymerization of lactide.

As the lactic acid, for example, at least one selected from the group consisting of L-lactic acid, D-lactic acid, and DL-lactic acid can be used. As the lactide, for example, at least one selected from the group consisting of L-lactide, D-lactide, DL-lactide, and meso-lactide can be used.

As the polylactic acid, at least one selected from the group consisting of poly(L-lactic acid), poly(D-lactic acid), poly(DL-lactic acid), and a stereocomplex polylactic acid obtained by mixing poly(L-lactic acid) and poly(D-lactic acid) can be used. In an aspect, the polylactic acid is at least one selected from the group consisting of poly(L-lactic acid), poly(D-lactic acid), and poly(DL-lactic acid), and preferably at least one selected from the group consisting of poly(L-lactic acid) and poly(D-lactic acid).

From the viewpoint of easily obtaining the intended effects of the present invention, the second block (B) contains a structural unit derived from poly(L-lactic acid) or a structural unit derived from poly(D-lactic acid) preferably in a content ratio of 70 mass% or more, more preferably 80 mass% or more, and even more preferably 90 mass% or more with respect to 100 mass% of the whole amount of the structural units constituting the second block (B). In a preferable aspect, the second block (B) consists of the structural unit derived from poly(L-lactic acid) or the structural unit derived from poly(D-lactic acid), that is, the content ratio of the structural unit derived from poly(L-lactic acid) or the structural unit derived from poly(D-lactic acid) is 100 mass%.

In an aspect of the present invention, when the second block (B) contains the structural unit derived from polylactic acid, a stereocomplex may not be formed from all the structural units derived from polylactic acid.

### (Structural Unit other than Polylactic Acid Unit)

The second block (B) may or may not contain a structural unit other than the polylactic acid unit.

A monomer capable of forming the structural unit other than the polylactic acid unit is not particularly limited as long as the effects of the present invention are not excessively impaired. Examples of the monomer include α-acetolactone, β-propiolactone, γ-butyrolactone, δ-valerolactone, and ε-caprolactone.

The content ratio of the structural unit other than the polylactic acid unit in the second block (B) is preferably 30 mass% or less, more preferably 20 mass% or less, still more preferably 15 mass% or less, and even still more preferably 10 mass% or less with respect to 100 mass% of the whole amount of the structural units constituting the second block (B). In an aspect of the present invention, the content ratio of the structural unit other than the polylactic acid unit in the second block (B) is preferably 0 to 30 mass%, more preferably 0 to 20 mass%, still more preferably 0 to 15 mass%, and even still more preferably 0 to 10 mass% with respect to 100 mass% of the whole amount of the structural units constituting the second block (B).

### (Number-Average Molecular Weight of Second Block (B))

From the viewpoint of easily obtaining the effect that can suppress a reduction in heat resistance of any polyester resin and impart impact resistance, the number-average molecular weight of the second block (B) is preferably 5,000 to 150,000, more preferably 10,000 to 100,000, and still more preferably 20,000 to 40,000.

When the block copolymer has a plurality of second blocks (B), the number-average molecular weight of the second blocks (B) means the sum of the number-average molecular weights of all the blocks.

The number-average molecular weight of the second block (B) can be determined from the number-average molecular weight of the block copolymer and the mass content ratio of the second block (B) described below.

The number-average molecular weight of the second block (B) can be modified, for example, by adjusting the polymerization condition of polylactic acid, and the like.

### (Melting Point of Polylactic Acid capable of forming Second Block (B))

From the viewpoint of processability, which exhibits easiness of melt processing, the melting point of a polylactic acid capable of forming the second block (B) is preferably 185°C or less, more preferably 180°C or less, still more preferably 170°C or less, and even still more preferably 160°C or less.

From the viewpoint of practical heat resistance, the melting point of the polylactic acid capable of forming the second block (B) is preferably 110°C or more, more preferably 120°C or more, and still more preferably 125°C or more.

From the viewpoint of satisfactory processability and heat resistance, the melting point of the polylactic acid capable of forming the second block (B) is preferably 110°C or more and 185° C or less, more preferably 120°C or more and 180°C or less, still more preferably 120°C or more and 170°C or less, and even still more preferably 125°C or more and 160°C or less.

The melting point of the polylactic acid capable of forming the second block (B) can be determined with a differential scanning calorimeter.

### (Copolymerization Mode of Block Copolymer)

A copolymerization mode of the block copolymer is not particularly limited as long as the above-mentioned conditions are satisfied, and may be, for example, any copolymerization mode, such as diblock, triblock, multiblock such as tetra or more-block, graft, star, and dendrimer. One kind of the copolymerization modes may be present alone, or two or more kinds thereof may be coexistent. Among these, from the viewpoint of improving mechanical properties including impact resistance in blending in a resin composition containing any polyester resin, the block copolymer according to the present embodiment is preferably a block copolymer containing the first block (A) and the second block (B) or a block copolymer composed of the first block (A) and the second block (B), more preferably a multi-block copolymer containing two or more second blocks (B), and still more preferably a triblock copolymer of [second block (B)]-[first block (A)]-[second block (B)].

### (Structural Unit Ratio of Block Copolymer)

The ratio of the second block (B) is preferably 5 to 95 mass% with respect to 100 mass% of the sum of the first block (A) and the second block (B).

In the present invention, the "ratio of the second block (B)" may be referred to as "hard ratio" in the block copolymer.

When the ratio of the second block (B) is 5 mass% or more, the heat resistance of the resin composition containing the block copolymer or the molded object thereof tends to be more excellent. Furthermore, when the ratio of the second block (B) is 95 mass% or less, the impact resistance and biodegradability of the resin composition containing the block copolymer or the molded object thereof tend to be more excellent.

From the viewpoint of easily improving the heat resistance and transparency of the resin composition containing the block copolymer or the molded object thereof, the ratio of the second block (B) is more preferably 7 mass% or more, still more preferably 10 mass% or more, and even still more preferably 15 mass% or more. From the viewpoint of easily improving hydrolysis resistance, impact resistance, biodegradability, and the like, the ratio of the second block (B) is more preferably 80 mass% or less, still more preferably 70 mass% or less, still more preferably 60 mass% or less, still more preferably 50 mass% or less, still more preferably 45 mass% or less, and even still more preferably 40 mass% or less. The lower limit values and the upper limit values described in a stepwise manner may be combined each independently as described above. For example, in an aspect of the present invention, the ratio of the second block (B) is preferably 5 to 95 mass%, more preferably 5 to 80 mass%, still more preferably 5 to 70 mass%, still more preferably 5 to 60 mass%, still more preferably 5 to 50 mass%, and even still more preferably 5 to 45 mass% with respect to 100 mass% of the sum of the first block (A) and the second block (B).

For example, in an aspect of the present invention, from the viewpoint of easily improving the transparency of the resin composition containing the block copolymer or the molded object thereof, the ratio of the second block (B) is more preferably 7 to 45 mass%, still more preferably 10 to 45 mass%, and even still more preferably 15 to 45 mass% with respect to 100 mass% of the sum of the first block (A) and the second block (B).

For example, in an aspect of the present invention, from the viewpoint of easily improving the impact resistance of the resin composition containing the block copolymer or the molded object thereof, the ratio of the second block (B) is more preferably 5 to 40 mass%, still more preferably 5 to 30 mass%, and even still more preferably 5 to 20 mass% with respect to 100 mass% of the sum of the first block (A) and the second block (B).

The ratio of the second block (B) can be determined by ¹H-NMR, and can be specifically determined by a method described in Examples.

The sum of the content ratios of the first block (A) and the second block (B) in the block copolymer is preferably 90 mass% or more, and more preferably 95 mass% or more with respect to 100 mass% of the whole amount of the structural units constituting the block copolymer, and may be 100 mass%. The upper limit value of the sum of the content ratios of the first block (A) and the second block (B) in the block copolymer is not limited, and is, for example, 100 mass%. The lower limit values and the upper limit values described in a stepwise manner may be combined each independently as described above. For example, in an aspect of the present invention, the sum of the content ratios of the first block (A) and the second block (B) is preferably 90 to 100 mass%, and more preferably 95 to 100 mass% with respect to 100 mass% of the whole amount of the structural units constituting the block copolymer.

The block copolymer may or may not contain a structural unit other than the first block (A) and the second block (B) (i.e., a structural unit that is neither the first block (A) nor the second block (B)). The structural unit other than the first block (A) and the second block (B) (in the present description, is used to mean the "structural unit that is neither the first block (A) nor the second block (B)") is not particularly limited as long as the effects of the present invention are not excessively impaired. The content ratio of the structural unit other than the first block (A) and the second block (B) in the block copolymer is preferably 10 mass% or less, and more preferably 5 mass% or less with respect to 100 mass% of the whole amount of the structural units constituting the block copolymer, and may be 0 mass%. The lower limit value of the content ratio of the structural unit other than the first block (A) and the second block (B) in the block copolymer is not limited, and is, for example, 0 mass%. The lower limit values and the upper limit values described in a stepwise manner may be combined each independently as described above. For example, in an aspect of the present invention, the content ratio of the structural unit other than the first block (A) and the second block (B) is preferably 0 to 10 mass%, and more preferably 0 to 5 mass% with respect to 100 mass% of the whole amount of the structural units constituting the block copolymer.

### (Number-Average Molecular Weight α(BCP) of Block Copolymer)

From the viewpoint of easily obtaining the effect that can suppress a reduction in heat resistance of any polyester resin and impart impact resistance, the number-average molecular weight α(BCP) of the block copolymer is preferably 28,750 or more, more preferably 30,000 or more, still more preferably 31,000 or more, and even still more preferably 36,000 or more. From the viewpoint of ease of production and processability, the number-average molecular weight α(BCP) of the block copolymer is preferably 400,000 or less, more preferably 200,000 or less, and still more preferably 100,000 or less. The lower limit values and the upper limit values described in a stepwise manner may be combined each independently as described above. For example, in an aspect of the present invention, the number-average molecular weight α(BCP) of the block copolymer is preferably 28,750 to 400,000, more preferably 30,000 to 200,000, still more preferably 31,000 to 100,000, and even still more preferably 36,000 to 100,000.

The number-average molecular weight α(BCP) of the block copolymer can be determined by gel permeation chromatography (GPC), and can be specifically determined by a method described in Examples.

### (Glass Transition Temperature Tg(BCP) of Block Copolymer)

The glass transition temperature Tg(BCP) of the block copolymer according to the present embodiment is not particularly limited, and is preferably -80°C or more and -15°C or less. When the glass transition temperature is within the above-mentioned numerical range, the block copolymer, the resin composition containing the block copolymer, and the molded object of the resin composition containing the block copolymer tend to have excellent impact resistance.

From the viewpoint of easily achieving satisfactory low-temperature properties such as impact resistance at a low temperature of the block copolymer, the resin composition containing the block copolymer, and the molded object of the resin composition containing the block copolymer, the glass transition temperature Tg(BCP) of the block copolymer is more preferably -20°C or less, and still more preferably -25°C or less, and may be, for example, - 30°C or less or -35°C or less.

From the viewpoint of easily achieving satisfactory low-temperature impact resistance of the block copolymer, the resin composition containing the block copolymer, and the molded object of the resin composition containing the block copolymer, the glass transition temperature Tg(BCP) of the block copolymer is preferably lower. On the other hand, the glass transition temperature Tg(BCP) of the block copolymer may be, for example, -75°C or more, -70°C or more, or -65°C or more.

The lower limit values and the upper limit values described in a stepwise manner may be combined each independently as described above. For example, in an aspect of the present invention, the glass transition temperature Tg(BCP) of the block copolymer is preferably -80°C to 15°C, more preferably -80°C to -20°C, still more preferably -80°C to -25°C, still more preferably -80°C to -30°C, and even still more preferably -80°C to -35°C, and may be, for example, -75°C to -35°C, -70°C to -35°C, or -65°C to -35°C.

The glass transition temperature of the block copolymer can be determined, for example, by differential scanning calorimetry.

### (Properties of Block Copolymer)

Since the block copolymer according to the present embodiment contains the first block derived from a high-molecular-weight aliphatic polyester satisfying the condition 2(BCP), the properties thereof can be imparted to a molded object of the block copolymer or the resin composition containing the block copolymer. For example, the increased molecular weight of the block copolymer according to the present embodiment is achieved by the first block (A) derived from the high-molecular-weight aliphatic polyester. Therefore, the block copolymer according to the present embodiment has excellent heat resistance in the form of the molded object of the block copolymer or the molded object of the resin composition containing the block copolymer. In the block copolymer according to the present embodiment, the first block (A) forms a soft segment, and therefore impact resistance can be imparted, for example, to the molded object of the block copolymer or the molded object of the resin composition containing the block copolymer.

### (Imparting Properties to Resin Composition)

When the resin composition is formed using the block copolymer according to the present embodiment, the properties of the block copolymer can be imparted to the molded object of the resin composition. For example, the block copolymer according to the present embodiment has a high molecular weight, and therefore heat resistance can be imparted to the molded object of the resin composition. The block copolymer according to the present embodiment has an amorphous soft molecular chain derived from an aliphatic diol having a specific branched structure in the main chain of the molecular structure, and therefore impact resistance can be imparted to, for example, the molded object of the resin composition.

### (Method for Producing Block Copolymer)

As a method for producing a block copolymer, for example, a publicly known production method can be adopted. The publicly known method for producing a block copolymer is, for example, a method in which an aliphatic polyester and lactide are subjected to a polymerization reaction.

As the aliphatic polyester, the aliphatic polyester described in the above-mentioned embodiment or the second aliphatic polyester obtained by the method for producing an aliphatic polyester described in the above-mentioned embodiment is preferably used. That is, the aliphatic polyester (PE) is preferably used.

In the polymerization reaction of the aliphatic polyester with the lactide, a ring-opening polymerization catalyst (e.g., an organic carboxylic acid metal salt such as tin octylate, a metal halide such as tin chloride, or a metal oxide such as tin oxide) is preferably used. Examples of the polymerization reaction include solution polymerization, melting polymerization, and interface polycondensation. A publicly known polymerization reaction condition can be set in any of the polymerization reactions.

Another publicly known method for producing a block copolymer may be, for example, a method in which a polylactic acid capable of forming the polylactic acid unit is synthesized and the polylactic acid and the aliphatic polyester are allowed to react with each other.

The polylactic acid can be synthesized by a publicly known method. For example, the polylactic acid may be synthesized by a reaction of lactic acid through direct condensation, or may be synthesized by a reaction through ring-opening polymerization of lactide.

In the polymerization reaction of the polylactic acid with the polyester, an esterification catalyst (e.g., an organic carboxylic acid metal salt such as tin octylate, a metal halide such as tin chloride, or a metal oxide such as tin oxide) is preferably used. Examples of the polymerization reaction include solution polymerization, melting polymerization, and interface polycondensation. A publicly known polymerization reaction condition can be set in any of the polymerization reactions.

Furthermore, an aspect of the method for producing a block copolymer includes the following production method.

A method for producing a block copolymer, the block copolymer containing a first block (A) derived from an aliphatic polyester containing a structural unit (a1) derived from an aliphatic diol having an alkyl group as a branched chain and 3 or more carbon atoms in a main chain and a structural unit (a2) derived from an aliphatic dicarboxylic acid, and a second block (B) derived from a polylactic acid containing a structural unit derived from lactic acid, and satisfying three conditions: a condition 1(BCP), a condition 2(BCP), and a condition 3(BCP).

Condition 1(BCP): α(BCP) and β(BCP) described below satisfy the following relational expression (III): $α \left(BCP\right) / \left(150-β\left(BCP\right)\right) \geq 575$ (III) In the relational expression (III), α(BCP) is the number-average molecular weight of the block copolymer, β(BCP) is the terminal OH group ratio (mol%) of the block copolymer, and is the ratio (percentage) of the number of terminal OH groups when the total number of terminal groups of the block copolymer is 100 mol%.

Condition 2(BCP): the sum (M(a)) of the average formula weight (M(a1)) of a moiety of the structural unit (a1) and the average formula weight (M(a2)) of a moiety of the structural unit (a2) in the block copolymer is within a range of 25,000 to 75,000. $β \left(BCP\right) \geq 25$ In the method, the second block (B) derived from a polylactic acid containing a structural unit derived from lactic acid is formed on the first block (A) derived from an aliphatic polyester produced by allowing a first aliphatic polyester containing the structural unit (a1) and the structural unit (a2) and at least one selected from the group consisting of a second aliphatic dicarboxylic acid (z1), an aliphatic dicarboxylic acid alkyl ester (z2), and an aliphatic dicarboxylic acid anhydride (z3) to react with each other through direct condensation of lactic acid or ring-opening polymerization of lactide so that the second block (B) is bonded to the first block (A).

In the present embodiment, the first block (A) and the second block (B) are the same as those described in the embodiment of the block copolymer, and the same applies to suitable aspects thereof.

The block copolymer obtained by the production method of the present embodiment is the same as one described in the embodiment of the block copolymer, and the same applies to suitable aspects thereof.

### [Resin Composition (Block Copolymer-containing Resin Composition)]

A block copolymer-containing resin composition according to an embodiment of the present invention contains the block copolymer (BCP) according to the above-mentioned embodiment (in the present description, the "block copolymer (BCP)" represents at least one selected from the block copolymer described in the section of the block copolymer according to an embodiment of the present invention, and the block copolymer produced by the production method described in the section of the method for producing a block copolymer according to an embodiment of the present invention), and preferably contains the block copolymer (BCP) according to the above-mentioned embodiment and the above-mentioned polyester resin (D). The block copolymer (BCP) may be a block copolymer obtained by the method for producing a block copolymer according to the above-mentioned embodiment. One kind of the polyester resins (D) may be used alone, or two or more kinds thereof may be used in combination. According to the present embodiment, the resin composition contains the block copolymer (BCP), and therefore the properties of the block copolymer (BCP) can be imparted to the molded object of the resin composition. Specifically, this can contribute to modification of the polyester resin (D).

A resin composition containing the block copolymer according to an embodiment of the present invention may or may not contain the aliphatic polyester (PE) according to the above-mentioned embodiment.

### (Polyester Resin (D))

As the polyester resin (D) contained in the block copolymer-containing resin composition according to the present embodiment, any polyester resin can be used. Examples of the polyester resin (D) are as described in the embodiment of the aliphatic polyester resin-containing resin composition, and the same applies to suitable aspects thereof.

### (Content Ratio of Block Copolymer (BCP))

In an embodiment of the block copolymer-containing resin composition, the content of the block copolymer (BCP) is preferably 0.5 to 50.0 mass%, more preferably 1.0 to 40.0 mass%, still more preferably 1.5 to 30.0 mass%, still more preferably 2.0 to 20.0 mass%, and even still more preferably 2.0 to 15.0 mass% with respect to 100 mass% of the whole amount of the block copolymer-containing resin composition. In an embodiment of the block copolymer-containing resin composition, from the viewpoint of easily improving the impact resistance of the block copolymer-containing resin composition and a molded object of the block copolymer-containing resin composition, the content of the block copolymer (BCP) may be 5 to 20.0 mass% or 5 to 15.0 mass% with respect to 100 mass% of the whole amount of the block copolymer-containing resin composition.

In an embodiment of the block copolymer-containing resin composition, the block copolymer-containing resin composition contains the block copolymer (BCP) preferably in an amount of 0.5 to 50.0 mass%, more preferably 1.0 to 40.0 mass%, still more preferably 1.5 to 30.0 mass%, still more preferably 2.0 to 20.0 mass%, still more preferably 2.0 to 15.0 mass%, and even still more preferably 2.0 to 13.0 mass% with respect to 100 mass% of the sum of the block copolymer (BCP) and the polyester resin (D). In the case of the above-mentioned content ratios, the effect that can suppress a reduction in heat resistance of any polyester resin and impart impact resistance can be sufficiently obtained.

In an embodiment of the block copolymer-containing resin composition, from the viewpoint of easily improving the impact resistance of the block copolymer-containing resin composition and the molded object of the block copolymer-containing resin composition, the content of the block copolymer (BCP) may be 5 to 20.0 mass%, 5 to 15.0 mass%, or 5 to 13.0 mass% with respect to 100 mass% of the sum of the block copolymer (BCP) and the polyester resin (D).

The total content ratio of the block copolymer (BCP) and the polyester resin (D) in the block copolymer-containing resin composition of the present embodiment is preferably 80 mass% or more, more preferably 85 mass% or more, still more preferably 90 mass% or more, still more preferably 95 mass% or more, and even still more preferably 98 mass% or more. The total content ratio of the block copolymer (BCP) and the polyester resin (D) in the block copolymer-containing resin composition of the present embodiment may be 100 mass% or less. The lower limit values and the upper limit values described in a stepwise manner may be combined each independently as described above. For example, in an aspect of the present invention, the total content ratio of the block copolymer (BCP) and the polyester resin (D) is preferably 80 to 100 mass%, more preferably 85 to 100 mass%, still more preferably 90 to 100 mass%, still more preferably 95 to 100 mass%, and even still more preferably 98 to 100 mass% with respect to 100 mass% of the whole amount of the block copolymer-containing resin composition.

The above-mentioned content ratios are preferred since the effects of the present invention are more significantly exerted.

### (Other Component)

The block copolymer-containing resin composition of the present embodiment may contain another component that is at least one selected from the group consisting of a plasticizer other than the aliphatic polyester (PE), the block copolymer (BCP), and the polyester resin (D); a resin other than the polyester resin (D); and another additive. Examples of the plasticizer, the resin other than the polyester resin (D), and the other additive that may be contained in the block copolymer-containing resin composition are each the same as those described in the section of the embodiment of the aliphatic polyester-containing resin composition, and the same applies to suitable aspects thereof.

Furthermore, the block copolymer-containing resin composition may or may not contain the aliphatic polyester (PE) according to the above-mentioned embodiment as the resin other than the polyester resin (D).

### (Method for Producing Block Copolymer-containing Resin Composition)

A method for producing the block copolymer-containing resin composition of the present embodiment is not particularly limited, and examples thereof are the same as those described in the above-mentioned embodiment of the aliphatic polyester-containing resin composition.

### (Properties of Block Copolymer-containing Resin Composition)

### (Impact Resistance)

When the block copolymer-containing resin composition according to the present embodiment is prepared in the form of a resin composition containing a polyester resin, preferably a resin composition containing a polyester resin (D), a molded object thereof tends to exhibit excellent impact resistance. For example, it is preferable that an impact resistance value (kJ/m²) measured in the section of Examples described below be a value higher than the impact resistance value of the polyester resin.

### (Heat Resistance)

When the block copolymer-containing resin composition according to the present embodiment is prepared in the form of a resin composition containing a resin composition containing a polyester resin, preferably a polyester resin (D), the molded object thereof tends to exhibit excellent heat resistance.

### (Transparency)

When the block copolymer-containing resin composition according to the present embodiment is prepared in the form of a resin composition containing a resin composition containing a polyester resin, preferably a polyester resin (D), the molded object thereof tends to exhibit properties in which transparency is not largely impaired. Therefore, the present embodiment is useful in preparation of a resin composition containing a resin composition containing a polyester resin, preferably a polyester resin (D) that requires retention of transparency. For example, transparency can be evaluated by using the value of Haze measured by a method described in the section of Examples described below.

A resin composition according to another embodiment of the present invention may contain the block copolymer (BCP) according to the above-mentioned embodiment, and may not contain the polyester resin (D). According to the other embodiment, the resin composition containing the block copolymer (BCP) or a molded object thereof may exhibit the properties of the block copolymer (BCP).

### [Molded Object]

A molded object according to an embodiment of the present invention is a molded object of the block copolymer-containing resin composition according to the above-mentioned embodiment. A molded object according to another embodiment is a molded object of the resin composition according to the above-mentioned other embodiment (the block copolymer-containing resin composition containing no polyester resin (D)). According to these embodiments, the properties of the block copolymer can be exhibited. The shape of the molded object is not particularly limited, may be a shape intended for secondary processing, such as a film, a sheet, a fiber, a nonwoven fabric, a woven fabric, a foam, a tube, a roll, a spherical shape, a powder, or a scale shape, or may be a shape of a container, a bag, a kitchenware, or a housing. Alternatively, the molded object may be used in the form of a lamination with another material such as paper, a resin, a metal, or ceramics. A molding method is not limited, and melt extrusion-molding, blow molding, inflation molding, drawing molding, vacuum molding, injection molding, solution coating, spray coating, solution impregnation, or the like can be used. A product can be obtained by combination of the molding methods. When the resultant molded object is subjected to heat treatment (annealing) under appropriate conditions, performance such as crystallizability, tensile properties, and heat resistance may be improved.

Furthermore, the aliphatic polyester (PE), the block copolymer (BCP), the aliphatic polyester-containing resin composition, the block copolymer-containing resin composition, the molded object of the aliphatic polyester-containing resin composition, and the molded object of the block copolymer-containing resin composition that are each an embodiment of the present invention can be each independently suitably used by utilizing their biodegradability, impact resistance, and heat resistance for molded products such as a sheet, a film, a tube, a hose, and a belt and a pressure-sensitive adhesive. Specifically, they can suitably used for footwear such as shoes and fashion sandals; household appliance members such as a television, a stereo, a cleaner, and a refrigerator; building materials such as a door of a building and a packing for window-frame sealing; automotive interior and exterior components such as a bumper component, a body panel, a weather strip, a grommet, skins of an instrument panel, and an airbag cover; a grip of scissors, a driver, a toothbrush, a ski pole and the likes; food packaging materials such as a food wrap film, a laminate film for sealing, and a coating agent; medical devices such as an infusion solution bag, a syringe, a catheter, and protective gloves; plugs for containers in which foods, beverages, or drugs are stored; a cap liner; pressure-sensitive adhesive materials such as a hot-melt adhesive, a pressure-sensitive tape, and an adhesive layer of a protective film; and agricultural products such as an agricultural mulch film, a fertilizer coating material, a shifting-sand prevention agent, and a soil modifier.

### Examples

Hereinafter, the present invention will be described in detail with reference to Examples, and the present invention is not limited to these examples.

### [First Example (Aliphatic Polyester)]

### [Component]

Components used in Examples and Comparative Examples are as described below.
MPD: 3-methyl-1,5-pentanediol (manufactured by Kuraray Co., Ltd.)
AA: adipic acid (manufactured by Tokyo Chemical Industry Co., Ltd.)
Sn(Oct)₂: tin octylate (manufactured by Tokyo Chemical Industry Co., Ltd.)
(z1-1): AA ("adipic acid," manufactured by Tokyo Chemical Industry Co., Ltd.)
(z2-1): dimethyl adipate (manufactured by Tokyo Chemical Industry Co., Ltd.)
(z2-2): bis(2-ethylhexyl) adipate (manufactured by Tokyo Chemical Industry Co., Ltd.)
Toluene (manufactured by Kishida Chemical Co., Ltd.)
Methanol (manufactured by FUJIFILM Wako Pure Chemical Corporation)
Ti(OiPr)₄: tetraisopropyl orthotitanate (manufactured by FUJIFILM Wako Pure Chemical Corporation)
K₂TiO(C₂O₄)·2H₂O: potassium titanium oxalate dihydrate (manufactured by FUJIFILM Wako Pure Chemical Corporation)

### [Measurement and Evaluation]

### 1-1. Number-average Molecular Weight (Mn) of First Aliphatic Polyester

The number-average molecular weights (Mn) of first aliphatic polyesters obtained in a first step of Examples 1-1 to 1-11 and Comparative Example 1-6 (in Tables 1 and 2, "First aliphatic polyester" is also expressed as "First PE") were determined in terms of standard polystyrene by gel permeation chromatography (GPC).

### <GPC Measurement Conditions>

Apparatus: GPC apparatus "HLC-8820" manufactured by Tosoh Corporation
Separation column: "TSKgel (registered trademark) SuperMultipore HZ-M (column diameter: 4.6 mm, column length: 15 cm)" manufactured by Tosoh Corporation (two columns were connected in series for use)
Eluent: tetrahydrofuran (THF)
Eluent flow rate: 0.35 mL/min
Column temperature: 40°C
Detection method: differential refractive index (RI)
Injection volume: 10 µL
Concentration: 1 mg/1 mL (aliphatic polyester/THF)

### 1-2. Terminal OH Group Ratio of First Aliphatic Polyester

200 mL of toluene was added to dissolve the first aliphatic polyester obtained in the first step of each of Examples 1-1 to 1-11 and Comparative Example 1-6 as a sample, the solution was neutralized by titration with a 0.05 N ethanol solution of potassium hydroxide, and an acid value (mol/g) was determined in accordance with the following expression.$Acid value \left(mol/g\right) = \left(A-B\right) \times 0.05 / 1000 / S$
A: Dropwise addition amount (mL) of 0.05 N ethanol solution of potassium hydroxide required for neutralization
B: Dropwise addition amount (mL) of 0.05 N ethanol solution of potassium hydroxide for blank solution free from sample
S: Mass (g) of weighed sample

Subsequently, a hydroxyl value was calculated by ¹H-NMR measurement. The hydroxyl value (mol/g) of the first aliphatic polyester resin was calculated from the area ratio of a signal at approximately 3.7 ppm derived from methylene adjacent to the terminal OH group of the resultant spectrum and a signal at approximately 0.9 ppm derived from the main chain of the first aliphatic polyester.

### (¹H-NMR Measurement Conditions)

Apparatus: nuclear magnetic resonance spectrometer "JNM-ECX400" manufactured by JEOL Ltd.
Solvent: deuterated chloroform
Measurement temperature: 50°C
Integration count: 1,024 times
Measurement conditions: Temperature increasing rate: 10°C/min

A terminal OH group ratio was calculated from the acid value and hydroxyl value of the sample determined above in accordance with the following expression.$Total terminal group value \left(mol/g\right) = acid value \left(mol/g\right) + hydroxyl value \left(mol/g\right)$ 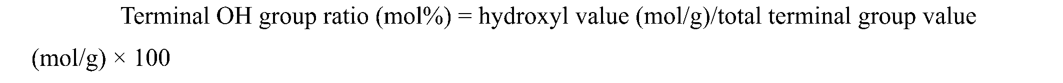 Terminal OH group ratio (mol%) = hydroxyl value (mol/g)/total terminal group value (mol/g) × 100

### 1-3. Terminal COOH Group Ratio of First Aliphatic Polyester

A terminal COOH group ratio was calculated from the acid value and hydroxyl value of the sample calculated in the same manner as in 1-2. Terminal OH Group Ratio described above in accordance with the following expression.$Total terminal group value \left(mol/g\right) = acid value \left(mol/g\right) + hydroxyl value \left(mol/g\right)$ 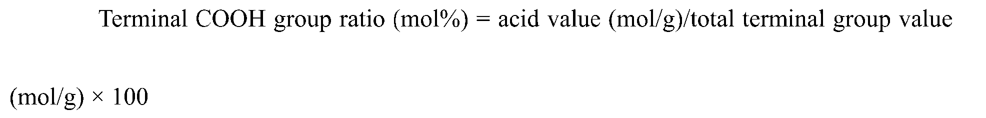 Terminal COOH group ratio (mol%) = acid value (mol/g)/total terminal group value (mol/g) × 100

### 1-4. Number-average Molecular Weight (α(PE)) of Second Aliphatic Polyester

The number-average molecular weights α(PE) of second aliphatic polyesters obtained in Examples and Comparative Examples (in Tables 1 and 2, "Second aliphatic polyester" is also expressed as "Second PE") were determined by GPC in the same manner as in 1-1. Number-average Molecular Weight of First Aliphatic Polyester described above.

The number-average molecular weight α(PE) means the sum (M(a)) of the average molecular weight (M(a1)) of a moiety of a structural unit (a1) and the average molecular weight (M(a2)) of a moiety of a structural unit (a2) in the second aliphatic polyester. In the first Example, the structural unit (a1) was a structural unit derived from 3-methyl-1,5-pentanediol (MPD) used in Examples and Comparative Examples. The structural unit (a2) was a structural unit derived from adipic acid (AA), and components (z1-1), (z2-1), and (z2-2) used in Examples and Comparative Examples.

### 1-5. Terminal OH Group Ratio (β(PE)) of Second Aliphatic Polyester

The terminal OH group ratios β(PE) of the second aliphatic polyesters obtained in Examples and Comparative Examples were determined in the same manner as in 1-2. Terminal OH Group Ratio of First Aliphatic Polyester described above.

### 1-6. Terminal COOH Group Ratio of Second Aliphatic Polyester

The terminal COOH group ratios of the second aliphatic polyesters obtained in Examples and Comparative Examples were determined in the same manner as in 1-3. Terminal COOH Group Ratio of First Aliphatic Polyester described above.

### 1-7. Evaluation of Suitability for PLA Block Modification

Regarding the second aliphatic polyesters obtained in Examples and Comparative Examples, values of the following relational expression (I) were determined. $α \left(PE\right) / \left(150-β\left(PE\right)\right)$ (I)

Suitability for PLA block modification was evaluated on the basis of the following criteria of the values of the relational expression (I).
A: the value of the relational expression (I) is 500 or more.
B: the value of the relational expression (I) is 400 or more and less than 500.
C: the value of the relational expression (I) is less than 400.

When a block copolymer containing a first block derived from the second aliphatic polyester obtained in each of Examples and Comparative Examples and a second block derived from a polylactic acid containing a structural unit derived from lactic acid is produced, the suitability for PLA block modification represents an expected value of the probability of producing an intended block copolymer from the viewpoint of an increase in molecular weight. Evaluation A is excellent in terms of expected value, Evaluation B is lower than Evaluation A, and Evaluation C is lower than Evaluation B.

### 1-8. Evaluation of Biodegradability (Compost)

Biodegradability was measured in compost in accordance with a method according to ISO 14855-2:2018, and evaluated on the basis of the following criteria.
A: the decomposition rate after 15 days is 20 mass% or more.
B: the decomposition rate after 15 days is 10 mass% or more and less than 20 mass%.
C: the decomposition rate after 15 days is 5 mass% or more and less than 10 mass%.
D: the decomposition rate after 15 days is less than 5 mass%.

### [Example 1-1]

### (First Step: Production of First Aliphatic Polyester)

110 parts by mole (151.7 g) of 3-methyl-1,5-pentanediol and 100 parts by mole (170.7 g) of adipic acid were put into a 500 mL four-necked flask equipped with a device capable of distilling a produced liquid and a vacuum pump so that the molar equivalent ratio OH group/COOH group of the amount of moles of -OH group of 3-methyl-1,5-pentanediol to the amount of moles of -COOH group of adipic acid was 1.1/1.0. Subsequently, tin octylate was added in an amount of 96.7 mg satisfying 0.03 phr with respect to the total weight of 3-methyl-1,5-pentanediol and adipic acid, a pre-reaction was allowed to proceed at 210°C under normal pressure in a nitrogen atmosphere for 6 hours, and a polycondensation reaction was then performed while water was distilled off upon heating at a degree of reduced pressure of 100 Pa for 2 hours.

As a result, a dispersion of a first aliphatic polyester having a number-average molecular weight Mn of 10,000 and a terminal OH group ratio of 99.9 mol% was obtained. The terminal COOH group ratio of the first aliphatic polyester was 0.1 mol%.

### (Second Step: Production of Second Aliphatic Polyester)

Next, 270.5 g of the first aliphatic polyester was put into a 500 mL four-necked flask equipped with a device capable of distilling a produced liquid and a vacuum pump, 4.4 g of adipic acid as a component (z1) was added to the dispersion of the first aliphatic polyester so that the molar equivalent with respect to the total number of terminal functional groups calculated from the total terminal functional group value of the first aliphatic polyester was 0.33, and tetraisopropyl orthotitanate was added as a catalyst in an amount of 274.9 mg satisfying 0.1 phr with respect to the total mass of the first aliphatic polyester and adipic acid as the component (z1).

The dispersion obtained above was depressurized to 2,000 Pa at a temperature of 220°C, subjected to a pre-reaction for 3 hours, and then depressurized to 100 Pa, and subjected to a reaction for 11 hours. The reaction was allowed to proceed until the number-average molecular weight was 39,700 with appropriate monitoring.

After completion of the reaction, the reaction system was returned to normal pressure, and the temperature was cooled to 80°C.

Next, solid content separation and washing operations were performed as described below.

Toluene was first added to dilute the product to a solid content concentration of 40 mass%, and this toluene solution was added to methanol in an amount twice the total amount of the solution. Subsequently, the supernatant liquid was discarded, and methanol in the same amount as the amount of the added toluene solution was further added for washing. The supernatant liquid was discarded, and the insoluble content was collected. The insoluble content was dried at 40°C with a vacuum dryer. As a result, the organic volatile content was removed, and the solid content remained.

Thus, a second aliphatic polyester was obtained.

The obtained second aliphatic polyester was subjected to the measurement and the evaluation. The results are shown in Table 1.

### [Examples 1-2 to 1-11]

Each of second aliphatic polyesters was obtained by polycondensation as described below. The obtained second aliphatic polyesters were each subjected to the measurement and the evaluation in the same manner as in Example 1-1. The results are shown in Table 1.

### (First Step)

The dispersion of the first aliphatic polyester was obtained under the same conditions as those in the first step of Example 1-1.

### (Second Step)

Subsequently, in the second step, polycondensation was performed in the same manner as in Example 1-1 except that a chain extending agent, a catalyst, and polycondensation conditions were changed to those shown in Table 1.

After that, the same solid content separation and washing operations as in Example 1-1 were performed to obtain the respective second aliphatic polyesters.

### [Comparative Example 1-1]

110 parts by mole (151.7 g) of 3-methyl-1,5-pentanediol and 100 parts by mole (170.7 g) of adipic acid were put into a 500 mL four-necked flask equipped with a device capable of distilling a produced liquid and a vacuum pump so that the molar equivalent ratio of the amount of moles of -OH group of 3-methyl-1,5-pentanediol to the amount of moles of -COOH group of adipic acid was 1.1/1.0. Subsequently, tin octylate was added in an amount of 322.4 mg satisfying 0.1 phr with respect to the total weight of 3-methyl-1,5-pentanediol and adipic acid, a pre-reaction was allowed to proceed at 220°C under normal pressure in a nitrogen atmosphere for 6 hours, and a polycondensation reaction was then performed while water was distilled off upon heating at a degree of reduced pressure of 100 Pa for 2 hours. That is, in Comparative Example 1-1, a procedure of one-stage polycondensation (without a chain extending agent) was adopted.

As a result, a dispersion of an aliphatic polyester having a number-average molecular weight Mn of 10,000 and a terminal OH group ratio of 99 mol% was obtained. The terminal COOH group ratio of the aliphatic polyester was 1 mol%.

After that, the same solid content separation and washing operations as in Example 1-1 were performed to obtain an aliphatic polyester (for the sake of convenience, referred to as "second aliphatic polyester resin"). The obtained second aliphatic polyester was subjected to the measurement and the evaluation in the same manner as in Example 1-1. The results are shown in Table 2.

### [Comparative Examples 1-2 to 1-5]

Polycondensation was performed in the same manner as in Comparative Example 1-1 except that a catalyst and polycondensation conditions were changed to those shown in Table 2.

After that, the same solid content separation and washing operations as in Example 1-1 were performed to obtain an aliphatic polyester (for the sake of convenience, referred to as "second aliphatic polyester resin"). The obtained second aliphatic polyesters were each subjected to the measurement and the evaluation in the same manner as in Example 1-1. The results are shown in Table 2.

### [Comparative Example 1-6]

### (First Step)

The dispersion of the first aliphatic polyester was produced under the same conditions as those in the first step of Example 1-1.

### (Second Step)

Subsequently, in the second step, polycondensation was performed in the same manner as in Example 1-1 except that a chain extending agent, a catalyst, and polycondensation conditions were changed to those shown in Table 1.

After that, the same solid content separation and washing operations as in Example 1-1 were performed to obtain a second aliphatic polyester. The obtained second aliphatic polyester was subjected to the measurement and the evaluation in the same manner as in Example 1-1. The results are shown in Table 2.

### [Table 1]

**Table 1**

| | | Example 1-1 | Example 1-2 | Example 1-3 | Example 1-4 | Example 1-5 | Example 1-6 |
|---|---|---|---|---|---|---|---|
| Structural unit (a1) | MPD [part by mole] | 110 | 110 | 110 | 110 | 110 | 110 |
| Structural unit (a2) | AA [part by mole] | 100 | 100 | 100 | 100 | 100 | 100 |
| Catalyst [phr] | Sn(Oct)₂ | 0.03 | 0.03 | 0.03 | 0.03 | 0.03 | 0.03 |
| Polycondensation temperature [°C] | | 210 | 210 | 210 | 210 | 210 | 210 |
| Polycondensation pressure [Pa] | | 100 | 100 | 100 | 100 | 100 | 100 |
| Polycondensation time [h] (Pre-reaction+Main polymerization) | | 6+2 | 6+2 | 6+2 | 6+2 | 6+2 | 6+2 |
| First PE | Mn | 10,000 | 10,000 | 10,000 | 10,000 | 10,000 | 10,000 |
| | Terminal OH group ratio [mol%] | 99.9 | 99.9 | 99.9 | 99.9 | 99.9 | 99.9 |
| | Terminal COOH group ratio [mol%] | 0.1 | 0.1 | 0.1 | 0.1 | 0.1 | 0.1 |
| Chain extending agent [molar equivalent/total number of terminal functional groups of first PE] | AA | 0.33 | 0.33 | 0.33 | - | - | 0.33 |
| | Dimethyl adipate | - | - | - | 0.33 | - | - |
| | Bis(2-ethylhexyl) adipate | - | - | - | - | 0.33 | - |
| Catalyst [phr] | Sn(Oct)₂ | - | - | - | - | - | - |
| | Ti(OiPr)₄ | 0.1 | 0.1 | - | 0.1 | - | 0.1 |
| | K₂TiO(C₂O₄)·2H₂O | - | - | 0.1 | - | 0.1 | - |
| Polycondensation temperature [°C] | | 220 | 180 | 220 | 150 | 150 | 220 |
| Polycondensation pressure [Pa] | | 100 | 100 | 100 | 100 | 100 | 100 |
| Polycondensation time [h] (Pre-reaction+Main polymerization) | | 3+11 | 3+41 | 3+33 | 3+38 | 3+27 | 3+26 |
| Second PE | α(PE) | 39,700 | 40,600 | 36,900 | 29,000 | 29,000 | 50,300 |
| | β(PE) [mol%] | 84 | 88 | 89 | 96 | 94 | 62 |
| | Terminal COOH group ratio [mol%] | 16 | 12 | 11 | 4 | 6 | 38 |
| | a(PE)/(150 -β(PE)) | 602 | 655 | 605 | 537 | 518 | 572 |
| Evaluation | Suitability for PLA block modification | A | A | A | A | A | A |
| | Biodegradability (compost) | A | A | A | A | A | A |

| | | Example 1-7 | Example 1-8 | Example 1-9 | Example 1-10 | Example 1-11 |
|---|---|---|---|---|---|---|
| Structural unit (a1) | MPD [part by mole] | 110 | 110 | 110 | 110 | 110 |
| Structural unit (a2) | AA [part by mole] | 100 | 100 | 100 | 100 | 100 |
| Catalyst [phr] | Sn(Oct)₂ | 0.03 | 0.03 | 0.03 | 0.03 | 0.03 |
| Polycondensation temperature [°C] | | 210 | 210 | 210 | 210 | 210 |
| Polycondensation pressure [Pa] | | 100 | 100 | 100 | 100 | 100 |
| Polycondensation time [h] (Pre-reaction+Main polymerization) | | 6+2 | 6+2 | 6+2 | 6+2 | 6+2 |
| First PE | Mn | 10,000 | 10,000 | 10,000 | 10,000 | 10,000 |
| | Terminal OH group ratio [mol%] | 99.9 | 99.9 | 99.9 | 99.9 | 99.9 |
| | Terminal COOH group ratio [mol%] | 0.1 | 0.1 | 0.1 | 0.1 | 0.1 |
| Chain extending agent [molar equivalent/total number of terminal functional groups of first PE] | AA | - | 0.33 | 0.33 | 0.33 | 0.33 |
| | Dimethyl adipate | 0.33 | - | - | - | - |
| | Bis(2-ethylhexyl) adipate | - | - | - | - | - |
| Catalyst [phr] | Sn(Oct)₂ | - | - | - | - | |
| | Ti(OiPr)₄ | - | - | 0.1 | - | 0.1 |
| | K₂TiO(C₂O₄)·2H₂O | 0.1 | 0.1 | - | 0.1 | |
| Polycondensation temperature [°C] | | 220 | 200 | 190 | 220 | 180 |
| Polycondensation pressure [Pa] | | 100 | 100 | 100 | 100 | 100 |
| Polycondensation time [h] (Pre-reaction+Main polymerization) | | 3+21 | 3+34 | 3+25 | 3+32 | 3+46 |
| Second PE | α(PE) | 32,500 | 45,300 | 37,100 | 34,800 | 34,100 |
| | β(PE) [mol%] | 96 | 78 | 90 | 89 | 94 |
| | Terminal COOH group ratio [mol%] | 4 | 22 | 10 | 11 | 6 |
| | α(PE)/(150 -β(PE)) | 602 | 629 | 618 | 570 | 609 |
| Evaluation | Suitability for PLA block modification | A | A | A | A | A |
| | Biodegradability (compost) | A | A | A | A | A |

### [Table 2]

**Table 2**

| | | Comparative Example 1-1 | Comparative Example 1-2 | Comparative Example 1-3 | Comparative Example 1-4 | Comparative Example 1-5 | Comparative Example 1-6 |
|---|---|---|---|---|---|---|---|
| Structural unit (a1) | MPD [part by mole] | 110 | 110 | 110 | 110 | 110 | 110 |
| Structural unit (a2) | AA [part by mole] | 100 | 100 | 100 | 100 | 100 | 100 |
| Catalyst [phr] | Sn(Oct)₂ | - | - | - | - | - | 0.03 |
| Polycondensation temperature [°C] | | - | - | - | - | - | 210 |
| Polycondensation pressure [Pa] | | - | - | - | - | - | 100 |
| Polycondensation time [h] (Pre-reaction + Main polymerization) | | - | - | - | - | - | 6+2 |
| First PE | Mn | - | - | - | - | - | 10,000 |
| | Terminal OH group ratio [mol%] | - | - | - | - | - | 99.9 |
| | Terminal COOH group ratio [mol%] | - | - | - | - | - | 0.1 |
| Chain extending agent [molar equivalent/total number of terminal functional groups of first PE] | AA | - | - | - | - | - | 0.40 |
| | Dimethyl adipate | - | - | - | - | - | - |
| | Bis(2-ethylhexyl) adipate | - | - | - | - | - | - |
| Catalyst [phr] | Sn(Oct)₂ | 0.1 | 0.1 | 0.1 | 0.1 | - | 0.1 |
| | Ti(OiPr)₄ | - | - | - | - | 0.1 | - |
| | K₂TiO(C₂O₄)·2H₂O | - | - | - | - | - | - |
| Polycondensation temperature [°C] | | 220 | 220 | 220 | 200 | 200 | 220 |
| Polycondensation pressure [Pa] | | 100 | 100 | 50 | 50 | 50 | 500 |
| Polycondensation time [h] (Pre-reaction + Main polymerization) | | 6+2 | 6+23 | 6+11 | 6+14 | 6+12 | 6+11 |
| Second PE | α(PE) | 10,000 | 29,200 | 27,400 | 19,500 | 31,100 | 31,000 |
| | β(PE) [mol%] | 99 | 90 | 50 | 86 | 87 | 69 |
| | Terminal COOH group ratio [mol%] | 1 | 10 | 50 | 14 | 13 | 31 |
| | α(PE)/(150 - β(PE)) | 196 | 487 | 274 | 305 | 494 | 383 |
| Evaluation | Suitability for PLA block modification | C | B | C | C | B | C |
| | Biodegradability (compost) | A | A | A | A | A | A |

From Tables 1 and 2, it was found that the second aliphatic polyesters of Examples 1-1 to 1-11 tend to satisfy a condition where the molecular weight (α(PE)) is high and a condition where the terminal OH group ratio (β(PE)) is high as compared with the second aliphatic polyesters of Comparative Examples 1-1 to 1-6. On the other hand, as described in Comparative Examples, the conventional technology tends to exhibit a trade-off in which an attempt is made to increase the molecular weight of an aliphatic polyester to reduce the terminal OH group ratio, which is unsuitable for block copolymerization, whereas an attempt is made not to excessively increase the molecular weight of the aliphatic polyester to suppress a reduction in terminal OH group ratio, and an increase in molecular weight cannot be achieved when a block copolymer is formed. Therefore, it was found that the present invention can overcome the trade-off in the conventional technology. Accordingly, it was found that excellent suitability in production of the block copolymer containing the second block derived from a polylactic acid using the second aliphatic polyester of each of Examples 1-1 to 1-11, and particularly contribution to an increase in molecular weight of the block copolymer can be expected.

Furthermore, it was found that the second aliphatic polyester having a high molecular weight and a high terminal OH group ratio is obtained even under a milder polycondensation pressure by the production method of the present invention as shown from comparation between Example 1-1 and Comparative Example 1-3. Moreover, it was found that the second aliphatic polyester having a high molecular weight and a high terminal OH group ratio is obtained even at a milder polycondensation temperature by the production method of the present invention as shown from comparation between Example 1-4 and Comparative Example 1-2.

### [Second Example (Aliphatic Polyester-containing Composition)]

### [Component]

Components used in Examples and Comparative Examples are as described below.
PE: the second aliphatic polyesters obtained in Example 1-4 and Comparative Example 1-1
(D1): polyester resin "INGEO (registered trademark) 2500HP" manufactured by NatureWorks LLC. (polylactic acid-based polymer)
(D2): polyester resin, product name "ecoflex (registered trademark) F BlendC1200" manufactured by BASF SE (PBAT: poly(butylene adipate/terephthalate))

### 2-1. Evaluation of Impact Resistance

### (Production of Specimen for Measurement of Impact Resistance)

A polyester resin (D1) of Reference Example 2-1, and a resin composition obtained in each of Reference Example 2-2, Example 2-1, and Comparative Example 2-1 were each depressurized to -0.1 MPaG using an oil rotary pump, pre-heated at 200°C for 5 minutes with a vacuum hot press machine ("IMC-183B" manufactured by Imoto Machinery Co., LTD), and then pressed at 51 kgf/cm² for 3 minutes. After that, the resultant was pressed at 70 kgf/cm² for 3 minutes with a cooling press machine equipped with a water-flow cooling system, to produce a press plate having a thickness of 3.0 mm. The obtained press plate was cut into a strip of 80 mm in length and 10 mm in width, and crystallized for 3 hours in a thermostatic chamber of 110°C. The strip was V-notched (remaining width: 8 mm, end radius: 0.25 mm) at the center of the long side, to produce a notched strip specimen.

### (Measurement of Impact Strength)

The notched strip specimen was stored at 23°C under a relative humidity of 49 %RH for 24 hours or more, and an impact strength (kJ/m²) in measurement at 23°C under a relative humidity of 49 %RH and a hammer load of 2 J was measured with a Charpy impact resistance test machine ("DG-CB" manufactured by Toyo Seiki Seisaku-sho, Ltd.). As a measured value, an average value of five measurements was adopted.

### 2-2. Evaluation of Heat Resistance

### (Production of Specimen for Load Deflection Temperature)

The polyester resin (D1) of Reference Example 2-1, and the resin composition obtained in each of Reference Example 2-2, Example 2-1, and Comparative Example 2-1 were each depressurized to -0.1 MPaG using an oil rotary pump, pre-heated at 200°C for 5 minutes with a vacuum hot press machine ("IMC-183B" manufactured by Imoto Machinery Co., LTD), and then pressed at 51 kgf/cm² for 3 minutes. After that, the resultant was pressed at 70 kgf/cm² for 3 minutes with a cooling press machine equipped with a water-flow cooling system, to produce a press plate having a thickness of 3.0 mm. The obtained press plate was cut into a strip of 80 mm in length and 10 mm in width, and crystallized for 3 hours in a thermostatic chamber of 110°C to produce a strip specimen.

### (Measurement of Load Deflection Temperature)

The strip specimen was stored at 23°C under a relative humidity of 49 %RH for 24 hours or more, and a load deflection temperature (°C) in measurement under a load of 0.45 MPa through a flatwise method was measured with a load deflection temperature test machine ("S-3M" manufactured by Toyo Seiki Seisaku-sho, Ltd.). As a measured value, an average value of three measurements was adopted.

### 2-3. Evaluation of Transparency

The polyester resin of Reference Example 2-1, and the resin composition obtained in each of Reference Example 2-2, Example 2-1, and Comparative Example 2-1 were each depressurized to -0.1 MPaG using an oil rotary pump, pre-heated at 200°C for 5 minutes with a vacuum hot press machine ("IMC-183B" manufactured by Imoto Machinery Co., LTD), and then pressed at 41 kgf/cm² for 1 minute. After that, the resultant was pressed at 20 kgf/cm² for 1 minute with a cooling press machine equipped with a water-flow cooling system, to produce a press plate having a thickness of 0.125 mm. The obtained press plate was cut into a square piece of 50 mm in length and 50 mm in width. As a result, a specimen was obtained.

The haze (%) of the specimen was measured with "Spectral Haze Meter SH7000" manufactured by Nippon Denshoku Industries Co., Ltd., light source: D65) by a method in accordance with JIS-K7136:2000.

### [Example 2-1]

5 parts by mass of the block copolymer obtained in Example 1-4, and 95 parts by mass of a polyester resin as the component (D1) were put into a kneader Labo Plastomill (product name "3S150," roller mixer type "R60" manufactured by Toyo Seiki Seisaku-sho, Ltd.), and melt-kneaded at a cylinder temperature of 210°C and a screw rotation speed of 50 rpm for 5 minutes to obtain a resin composition.

The obtained resin composition was subjected to the measurement and the evaluation. The results are shown in Table 3.

### [Comparative Example 2-1 and Reference Example 2-2]

Each resin composition was obtained in the same manner as in Example 2-1 except that a composition was changed to one shown in Table 3. The obtained resin composition was subjected to the measurement and the evaluation. The results are shown in Table 3.

### [Reference Example 2-1]

Results on a polyester resin (D1) commonly used in a third example are collectively shown as reference in Table 3.

**[Table 3]**

| | | Reference Example 2-1 | Reference Example 2-2 | Example 2-1 | Comparative Example 2-1 |
|---|---|---|---|---|---|
| PE [part by mass] | Second PE of Example 1-4 | - | - | 5 | - |
| | Second PE of Comparative Example 1-1 | - | - | - | 5 |
| Polyester resin (D) [part by mass] | (D1) | 100 | 90 | 95 | 95 |
| | (D2) | - | 10 | - | - |
| Impact resistance | Charpy impact resistance value [kJ/m²] | 11 | 16 | 26 | 28 |
| Heat resistance | Load deflection temperature [°C] | 68.7 | 70.7 | 68.1 | 66.2 |
| Transparency | Haze [%] | 0.8 | 98.7 | 24.9 | 21.6 |

From Table 3, it was found that when a resin composition is formed from the second aliphatic polyester of Example 1-4, satisfactory heat resistance can be maintained while the impact resistance of polylactic acid is largely improved as compared with Example 2-1 and Reference Example 2-1. It was found that when a resin composition is formed from the second aliphatic polyester of Comparative Example 1-1 that does not satisfy the conditions of the present invention, heat resistance is reduced with impact resistance being improved as compared with Comparative Example 2-1.

### [Third Example (Block Copolymer)]

### [Component]

Components used in Examples and Comparative Examples are as described below.
Second PE: the second aliphatic polyesters obtained in Examples 1-1, 1-6 to 1-11, and Comparative Examples 1-1 and 1-6
L-lactide: L-lactide manufactured by Tokyo Chemical Industry Co., Ltd.

### [Measurement and Evaluation]

### 3-1. Sum (M(a)) of Formula Weights

The value of α(PE) measured in 1-4 described above was adopted as the sum (M(a)) of the average formula weight (M(a1)) of a moiety of the structural unit (a1) and the average formula weight (M(a2)) of a moiety of the structural unit (a2) in the block copolymer obtained in each of Examples and Comparative Examples. In the third example, the structural unit (a1) was a structural unit derived from 3-methyl-1,5-pentanediol (MPD) contained in the second PE (the second aliphatic polyester). The structural unit (a2) was a structural unit derived from adipic acid (AA), or the component (z1-1), (z2-1), or (z2-2) contained in the second PE.

### 3-2. Hard Ratio

A hard ratio (mass%) was the mass content ratio (percentage) of the second block (B) derived from a polylactic acid containing a structural unit derived from lactic acid in the block copolymer obtained in each of Examples and Comparative Examples. In the third example, lactic acid is defined as L-lactide. In the third example, the first block (A) in the block copolymer obtained in each of Examples and Comparative Examples was the block derived from the second aliphatic polyester used in each of Examples and Comparative Examples.

The hard ratio was calculated using measurement results of ¹H-NMR (the measurement conditions of ¹H-NMR are as described below). Specifically, the relative amount of moles of the first block (A) and the relative amount of moles of the second block (B) were calculated from the area ratio of a signal at approximately 5.2 ppm derived from polylactic acid to a signal at appropriately 0.9 ppm derived from the first block (A) in the obtained spectrum. Next, each of the amounts of moles was multiplied by the molecular weight of each of the blocks, resulting in the relative mass. The mass content ratio (percentage) of the second block (B) when the sum of the relative masses was adjusted to be 100 was calculated as the hard ratio.

### (¹H-NMR Measurement Conditions)

Device: nuclear magnetic resonance spectrometer "JNM-ECX400" manufactured by JEOL Ltd.
Solvent: deuterated chloroform
Measurement temperature: 50°C
Integration count: 1,024 times
Temperature increasing rate: 10°C/min

### 3-3. Number-Average Molecular Weight (α(BCP)) of Block Copolymer

The number-average molecular weights α(BCP) of block copolymers obtained in Examples and Comparative Examples were determined by GPC in the same manner as in 1-4. Number-average Molecular Weight of Second Aliphatic Polyester described above.

### 3-4. Terminal OH Group Ratio (β(BCP)) of Block Copolymer

The terminal OH group ratios β(BCP) of the block copolymers obtained in Examples and Comparative Examples were determined in the same manner as in 1-2. Terminal OH Group Ratio of First Aliphatic Polyester described above.

### 3-5. Evaluation of Suitability for Polyester Resin Modification

Regarding the block copolymers obtained in Examples and Comparative Examples, values of the following relational expression (III) were determined. $α \left(BCP\right) / \left(150-β\left(BCP\right)\right)$ (III)

Suitability for polyester resin modification can be evaluated on the basis of the following criteria regarding the values of the relational expression (III).
A: the value of the relational expression (III) is 650 or more.
B: the value of the relational expression (III) is 575 or more and less than 650.
C: the value of the relational expression (III) is less than 575.

When a resin composition containing the block copolymer obtained in each of Examples and Comparative Examples and a polyester resin different from the first and second aliphatic polyesters is produced, the suitability for polyester resin modification represents an expected value in which the properties of the block copolymer are reflected to the resin composition containing the polyester resin. Evaluation A is excellent in terms of an expected value, Evaluation B is lower than Evaluation A but is sufficiently excellent, and Evaluation C is lower than Evaluation B.

### 3-6. Melting Point Tm (°C)

The melting points of the block copolymers obtained in Examples and Comparative Examples were measured with a differential scanning calorimeter by a method described in JIS K7121:2012. When a plurality of peaks were observed, the melting point derived from a peak at the highest temperature side was set to the melting point of the block copolymer.
Apparatus: differential scanning calorimetry analyzer "DSC822" manufactured by Mettler-Toledo. Measurement conditions: temperature increasing rate: 10°C/min

### 3-7. Glass transition temperature Tg (°C)

The glass transition temperatures of the block copolymers obtained in Examples and Comparative Examples were measured with a differential scanning calorimeter by a method described in JIS K7121:2012.
Apparatus: differential scanning calorimetry analyzer "DSC822" manufactured by Mettler-Toledo.
Measurement conditions: temperature increasing rate: 10°C/min

### 3-8. Evaluation of Biodegradability (Compost)

Biodegradability was measured in compost in accordance with a method according to ISO 14855-2:2018, and evaluated on the basis of the following criteria.
A: the decomposition rate after 15 days is 20 mass% or more.
B: the decomposition rate after 15 days is 10 mass% or more and less than 20 mass%.
C: the decomposition rate after 15 days is 5 mass% or more and less than 10 mass%.
D: the decomposition rate after 15 days is less than 5 mass%.

### [Example 3-1]

### (Preliminary Operation (Dehydration))

125 g of the second aliphatic polyester obtained in Example 1-1 and 407 g of toluene were put into a 1 L four-necked flask equipped with a water-cooling reflux condenser, and the temperature of the dispersion was increased to 140°C. As a result, a portion corresponding to 10 mass% of the whole amount of toluene was distilled off, resulting in dehydration in the system.

### (Copolymerization)

After that, the dispersion was cooled to 80°C, and 55 g of L-lactide was added to the dispersion so that the mass ratio of the second aliphatic polyester to L-lactide was 70/30. Furthermore, toluene in an amount corresponding to the weight distilled above was added to the dispersion. As a result, the dispersion having a solid content concentration of 30 mass% was obtained.

After that, the dispersion was heated to 100°C, tin octylate at a ratio of 0.1 mass% with respect to the second aliphatic polyester was then added to the dispersion, resulting in a reaction for 4 hours.

As a result, a toluene solution of the block copolymer containing the first block (A) derived from the second aliphatic polyester and the second block (B) derived from a polylactic acid containing a structural unit derived from L-lactide was obtained.

Since the terminal OH group ratio of the used second aliphatic polyester is high, most of the block copolymer obtained in Example 2-1 was estimated to be a triblock copolymer having a polyester structure of second block-first block-second block.

### (Solid Content Separation and Washing Operations)

Next, solid content separation and washing operation were performed as described below.

The resultant toluene solution was added to methanol in an amount twice the total amount of the solution. As a result, a solid was deposited. Next, methanol as a supernatant was discarded, methanol in the same amount as the amount of the added toluene solution was further added, and the solid content was washed. After that, methanol was discarded, and the solid was collected.

The resultant solid was dried at 40°C with a vacuum dryer to remove a volatile organic compound. Thus, a purified block copolymer was obtained.

The obtained block copolymer was subjected to the measurement and the evaluation. The results are shown in Table 4.

### [Examples 3-2 to 3-6 and Comparative Examples 3-1 and 3-2]

A preliminary operation and copolymerization were performed in the same manner as in Example 3-1 except that the second aliphatic polyester (Second PE) produced in the section of the first example and the mass ratio thereof were changed instead of 70 parts by mass of the second aliphatic polyester of Example 1-1, the mass ratio of the used L-lactide was changed as shown in Table 4, and the solid content concentration of the dispersion used in performing copolymerization, 30 mass%, was changed to the concentration shown in Table 4.

After that, the same solid content separation and washing operations as in Example 3-1 were performed to obtain each block copolymer. The obtained block copolymers were each subjected to the measurement and the evaluation in the same manner as in Example 3-1. The results are shown in Table 4.

### [Examples 3-7 and 3-8]

A preliminary operation and copolymerization were performed in the same manner as in Example 3-1 except that the second aliphatic polyester (Second PE) produced in the section of the first example and the mass ratio thereof were changed instead of 70 parts by mass of the second aliphatic polyester of Example 1-1 as shown in Table 4, L-lactide was changed to a mixture of L-lactide and D-lactide (L-lactide:D-lactide = 95:5 or 80:20 (mass ratio)), and the solid content concentration of the dispersion used in performing copolymerization, 30 mass%, was changed to the concentration shown in Table 4.

After that, the same solid content separation and washing operations as in Example 3-1 were performed to obtain each block copolymer. The obtained block copolymers were each subjected to the measurement and the evaluation in the same manner as in Example 3-1. The results are shown in Table 4.

### [Table 4]

**Table 4**

| | | Example 3-1 | Example 3-2 | Example 3-3 | Example 3-4 | Example 3-5 |
|---|---|---|---|---|---|---|
| Block (A) | Second PE [part by mass] of Example 1-1 | 70 | - | - | - | - |
| | Second PE [part by mass] of Example 1-6 | - | 70 | - | - | - |
| | Second PE [part by mass] of Example 1-7 | - | - | 70 | - | - |
| | Second PE [part by mass] of Example 1-8 | - | - | - | - | 90 |
| | Second PE [part by mass] of Example 1-9 | - | - | - | 93 | - |
| | Second PE [part by mass] of Example 1-10 | - | - | - | - | - |
| | Second PE [part by mass] of Example 1-11 | - | - | - | - | - |
| | Second PE [part by mass] of Comparative Example 1-1 | - | - | - | - | - |
| | Second PE [part by mass] of Comparative Example 1-6 | - | - | - | - | - |
| | M(a) | 39,700 | 50,300 | 32,500 | 37,100 | 45,300 |
| Block (B) | L-lactide [part by mass] | 30 | 30 | 30 | 7 | 10 |
| | D-lactide [part by mass] | - | - | - | - | - |
| Copolymerization condition | Solid content concentration [mass%] of dispersion | 30 | 20 | 30 | 30 | 30 |
| | Polymerization temperature [°C] | 100 | 100 | 100 | 100 | 100 |
| | Polymerization time [h] | 4 | 4 | 4 | 4 | 4 |
| BCP | Hard ratio [mass%] | 30 | 31 | 30 | 7 | 10 |
| | α(BCP) | 53,000 | 64,100 | 46,400 | 39,900 | 50,300 |
| | β(BCP) | 84 | 62 | 96 | 90 | 78 |
| | α(BCP)/(150 - β(BCP)) | 803 | 728 | 859 | 665 | 699 |
| Physical properties and evaluation | Tm [°C] | 155 | 155 | 154 | - | 145 |
| | Tg [°C] | -60 | -60 | -61 | -59 | -59 |
| | Suitability for polyester resin modification | A | A | A | A | A |
| | Biodegradability | A | A | A | A | A |

**Table 4 (continued)**

| | | Example 3-6 | Example 3-7 | Example 3-8 | Comparative Example 3-1 | Comparative Example 3-2 |
|---|---|---|---|---|---|---|
| Block (A) | Second PE [part by mass] of Example 1-1 | - | - | - | - | - |
| | Second PE [part by mass] of Example 1-6 | 58 | - | - | - | - |
| | Second PE [part by mass] of Example 1-7 | - | - | - | - | - |
| | Second PE [part by mass] of Example 1-8 | - | - | - | - | - |
| | Second PE [part by mass] of Example 1-9 | - | - | - | - | - |
| | Second PE [part by mass] of Example 1-10 | - | 61 | - | - | - |
| | Second PE [part by mass] of Example 1-11 | - | - | 88 | - | - |
| | Second PE [part by mass] of Comparative Example 1-1 | - | - | - | 70 | - |
| | Second PE [part by mass] of Comparative Example 1-6 | - | - | - | - | 70 |
| | M(a) | 50,300 | 34,800 | 34,100 | 10,000 | 31,000 |
| Block (B) | L-lactide [part by mass] | 42 | 39 | 12 | 30 | 30 |
| | D-lactide [part by mass] | - | 2 | 3 | - | - |
| Copolymerization condition | Solid content concentration [mass%] of dispersion | 20 | 30 | 26 | 50 | 30 |
| | Polymerization temperature [°C] | 100 | 100 | 100 | 100 | 100 |
| | Polymerization time [h] | 4 | 4 | 4 | 4 | 4 |
| BCP | Hard ratio [mass%] | 42 | 41 | 15 | 50 | 30 |
| | α(BCP) | 64,000 | 59,000 | 40,100 | 18,000 | 45,900 |
| | β(BCP) | 62 | 89 | 94 | 99 | 69 |
| | α(BCP)/(150 - β(BCP)) | 727 | 967 | 716 | 353 | 567 |
| Physical properties and evaluation | Tm [°C] | 165 | 147 | - | 140 | 157 |
| | Tg [°C] | -61 | -59 | -57 | -60 | -61 |
| | Suitability for polyester resin modification | A | A | A | C | C |
| | Biodegradability | A | A | A | A | A |

From Table 4, it was found that the block copolymers of Examples 3-1 to 3-8 tend to satisfy a condition where the number-average molecular weight (α(BCP)) is high and a condition where the terminal OH group ratio (β(BCP)) is high, that is, the ratio of a high-molecular-weight block copolymer having a triblock structure (triblock copolymer ratio) tends to be high as compared with the block copolymers of Comparative Examples 3-1 and 3-2. Therefore, it was found that excellent suitability in preparation of a resin composition containing the block copolymer of each of Examples 3-1 to 3-8 and the polyester resin, and particularly contribution of the properties of the high-molecular-weight triblock copolymer (particularly the properties of the triblock copolymer having an increased molecular weight, such as heat resistance, and the properties of a soft segment having an increased molecular weight, such as impact resistance) to the resin composition can be expected.

### [Forth Example (Block Copolymer-containing Resin Composition)]

### [Component]

Components used in Examples and Comparative Examples are as described below.
BCP: block copolymers obtained in Examples 3-1 to 3-8 and Comparative Examples 3-1 and 3-2
(D1): polyester resin "INGEO (registered trademark) 2500HP" manufactured by NatureWorks LLC. (polylactic acid-based polymer)
(D2): polyester resin, "product name ecoflex (registered trademark) F BlendC1200" manufactured by BASF SE (PBAT: poly(butylene adipate/terephthalate))

### 4-1. Evaluation of Impact Resistance

A specimen for measurement of impact strength (notched strip specimen) was prepared in the same manner as in 2-1 described above using each of the polyester resin of Reference Example 4-1, and the resin composition obtained in each of Reference Example 4-2, Examples, and Comparative Examples, and the impact strength (kJ/m²) was measured in the same manner as in 2-1. As a measured value, an average value of five measurements was adopted.

### 4-2. Evaluation of Heat Resistance

A specimen for load deflection temperature (strip specimen) was prepared in the same manner as in 2-2 described above using each of the polyester resin of Reference Example 4-1, and the resin composition obtained in each of Reference Example 4-2, Examples, and Comparative Examples, and the load deflection temperature (°C) was measured in the same manner as in 2-2. As a measured value, an average value of three measurements was adopted.

### 4-3. Evaluation of Transparency

The polyester resin of Reference Example 4-1, and the resin composition obtained in each of Reference Example 4-2, Examples, and Comparative Examples were each depressurized to -0.1 MPaG using an oil rotary pump, pre-heated at 200°C for 5 minutes with a vacuum hot press machine ("IMC-183B" manufactured by Imoto Machinery Co., LTD), and then pressed at 41 kgf/cm² for 1 minute. After that, the resultant was pressed at 20 kgf/cm² for 1 minute with a cooling press machine equipped with a water-flow cooling system, to produce a press plate having a thickness of 0.125 mm. The obtained press plate was cut into a square piece of 50 mm in length and 50 mm in width. As a result, a specimen was obtained.

The haze (%) of the specimen was measured with "Spectral Haze Meter SH7000" manufactured by Nippon Denshoku Industries Co., Ltd., light source: D65) by a method in accordance with JIS-K7136:2000.

### [Example 4-1]

7 parts by mass of the block copolymer obtained in Example 3-1, and 93 parts by mass of a polyester resin as the component (D1) were put into a kneader Labo Plastomill (product name "3S150", roller mixer type "R60" manufactured by Toyo Seiki Seisaku-sho, Ltd.), and melt-kneaded at a cylinder temperature of 210°C and a screw rotation speed of 50 rpm for 5 minutes to obtain a resin composition.

The obtained resin composition was subjected to the measurement and the evaluation. The results are shown in Table 5.

### [Examples 4-2 to 4-8, Comparative Examples 4-1 to 4-3, and Reference Example 4-2]

Each resin composition was obtained in the same manner as in Example 4-1 except that a composition was changed to one shown in Table 5. The obtained resin composition was subjected to the measurement and the evaluation. The results are shown in Table 5.

### [Reference Example 4-1]

Results on the polyester resin (D1) commonly used in the fourth example are collectively shown as reference in Table 5.

**[Table 5]**

| | | Reference Example 4-1 | Reference Example 4-2 | Example 4-1 | Example 4-2 | Example 4-3 | Example 4-4 | Example 4-5 | Example 4-6 | Example 4-7 | Example 4-8 | Comparative Example 4-1 | Comparative Example 4-2 | Comparative Example 4-3 |
|---|---|---|---|---|---|---|---|---|---|---|---|---|---|---|
| BCP [part by mass] | BCP of Example 3-1 | - | - | 7 | - | - | 10 | - | - | - | - | - | - | - |
| | BCP of Example 3-2 | - | - | - | 7 | - | - | - | - | - | - | - | - | - |
| | BCP of Example 3-3 | - | - | - | - | 3 | - | - | - | - | - | - | - | - |
| | BCP of Example 3-4 | - | - | - | - | - | - | 5 | - | - | - | - | - | - |
| | BCP of Example 3-5 | - | - | - | - | - | - | - | 6 | - | - | - | - | - |
| | BCP of Example 3-6 | - | - | - | - | - | - | - | - | 9 | - | - | - | - |
| | BCP of Example 3-7 | - | - | - | - | - | - | - | - | - | - | - | - | - |
| | BCP of Example 3-8 | - | - | - | - | - | - | - | - | - | 6 | - | - | - |
| | BCP of Comparative Example 3-1 | - | - | - | - | - | - | - | - | - | - | 10 | - | - |
| | BCP of Comparative Example 3-2 | - | - | - | - | - | - | - | - | - | - | - | 7.5 | 15 |
| Polyester resin (D) [part by mass] | (D1) | 100 | 90 | 93 | 93 | 97 | 90 | 95 | 94 | 91 | 94 | 90 | 92.5 | 85 |
| | (D2) | - | 10 | - | - | - | - | - | - | - | - | - | - | - |
| Impact resistance | Charpy impact resistance value [kJ/m²] | 11 | 16 | 22 | 27 | 13 | 26 | 32 | 27 | 17 | 28 | 28 | 17 | 27 |
| Heat resistance | Load deflection temperature [°C] | 68.7 | 70.7 | 67.6 | 67.4 | 68.9 | 67.4 | 68.7 | 68.9 | 69.4 | 68.6 | 63.4 | 68.7 | 66.5 |
| Transparency | Haze [%] | 0.8 | 98.7 | 10.8 | 11.3 | 3.4 | 14.5 | 22.6 | 17.3 | 3.9 | 15.5 | 9.9 | 6.5 | 29.4 |

From Table 5, it was found that in the resin compositions of Examples 4-1 to 4-8, the impact resistance can be largely improved while satisfactory heat resistance is maintained in the molded objects, unlike the resin compositions of Comparative Examples 4-1 to 4-3, and therefore the properties of the block copolymers are imparted to sufficiently modify the polyester resin of Reference Example 4-1.

From Table 5, it was found that in the resin compositions of Examples 4-1 to 4-8, the degree of reduction in Haze relative to the Haze of the polyester resin of Reference Example 4-1 is reduced, that is, the properties of the block copolymers can be imparted while a reduction in transparency is suppressed with the modification of the polyester resin, as compared with the resin compositions of Comparative Examples 4-1 to 4-3.

## Claims

1. An aliphatic polyester comprising a structural unit (a1) derived from an aliphatic diol having an alkyl group as a branched chain and 3 or more carbon atoms in a main chain and a structural unit (a2) derived from an aliphatic dicarboxylic acid, the aliphatic polyester satisfying three conditions: a condition 1(PE), a condition 2(PE), and a condition 3(PE):
Condition 1(PE): α(PE) and β(PE) below satisfy a relational expression (I) below: $α \left(PE\right) / \left(150-β\left(PE\right)\right) \geq 500$ (I) wherein α(PE) is a number-average molecular weight of the aliphatic polyester, and β(PE) is a terminal OH group ratio (mol%) of the aliphatic polyester, and represents a ratio (percentage) of the number of terminal OH groups when a total number of terminal groups of the aliphatic polyester is 100 mol%;
Condition 2(PE): a sum (M(a)) of an average formula weight (M(a1)) of a moiety of the structural unit (a1) and an average formula weight (M(a2)) of a moiety of the structural unit (a2) in the aliphatic polyester is within a range of 25,000 to 75,000; and $β \left(PE\right) \geq 25 .$

2. The aliphatic polyester according to claim 1, wherein the aliphatic diol has 3 or more and 10 or less carbon atoms in the main chain.

3. The aliphatic polyester according to claim 1, wherein the branched chain of the aliphatic diol is a methyl group.

4. The aliphatic polyester according to claim 1, wherein the aliphatic dicarboxylic acid has 4 or more and 12 or less carbon atoms.

5. A resin composition comprising the aliphatic polyester according to any one of claims 1 to 4.

6. The resin composition according to claim 5, further comprising a polyester resin (D) different from the aliphatic polyester.

7. A molded object of the resin composition according to claim 5.

8. A method for producing an aliphatic polyester by allowing a first aliphatic polyester containing a structural unit (a1) derived from an aliphatic diol having an alkyl group as a branched chain and 3 or more carbon atoms in a main chain and a structural unit (a2) derived from a first aliphatic dicarboxylic acid, and at least one selected from the group consisting of a second aliphatic dicarboxylic acid (z1), an aliphatic dicarboxylic acid alkyl ester (z2), and an aliphatic dicarboxylic acid anhydride (z3) to react with each other, to produce a second aliphatic polyester satisfying three conditions: a condition 1(PE2), a condition 2(PE2), and a condition 3(PE2):
Condition 1(PE2): α(PE2) and β(PE2) below satisfy a relational expression (II) below: $α \left(PE2\right) / \left(150-β\left(PE2\right)\right) \geq 500$ (II) wherein α(PE2) is a number-average molecular weight of the second aliphatic polyester, and β(PE2) is a terminal OH group ratio (mol%) of the second aliphatic polyester, and represents a ratio (percentage) of the number of terminal OH groups when a total number of terminal groups of the aliphatic polyester is 100 mol%;
Condition 2(PE2): a sum (M(a)) of an average formula weight (M(a1)) of a moiety of the structural unit (a1) and an average formula weight (M(a2)) of a moiety of the structural unit (a2) in the second aliphatic polyester is within a range of 25,000 to 75,000; and $β \left(PE2\right) \geq 25 .$

9. The method for producing an aliphatic polyester according to claim 8, the method comprising:
a first step of allowing the aliphatic diol having an alkyl group as a branched chain and 3 or more carbon atoms in a main chain and the first aliphatic dicarboxylic acid to react with each other to produce the first aliphatic polyester; and
a second step of allowing the first aliphatic polyester and at least one selected from the group consisting of the second aliphatic dicarboxylic acid (z1), the aliphatic dicarboxylic acid alkyl ester (z2), and the aliphatic dicarboxylic acid anhydride (z3) to react with each other.

10. A block copolymer comprising a first block (A) derived from an aliphatic polyester containing a structural unit (a1) derived from an aliphatic diol having an alkyl group as a branched chain and 3 or more carbon atoms in a main chain and a structural unit (a2) derived from an aliphatic dicarboxylic acid, and a second block (B) derived from a polylactic acid containing a structural unit derived from lactic acid, the block copolymer satisfying three conditions: a condition 1(BCP), a condition 2(BCP), and a condition 3(BCP):
Condition 1(BCP): α(BCP) and β(BCP) below satisfy a relational expression (III) below: $α \left(BCP\right) / \left(150-β\left(BCP\right)\right) \geq 575$ (III) wherein α(BCP) is a number-average molecular weight of the block copolymer, β(BCP) is a terminal OH group ratio (mol%) of the block copolymer, and represents a ratio (percentage) of the number of terminal OH groups when a total number of terminal groups of the block copolymer is 100 mol%;
Condition 2(BCP): a sum (M(a)) of an average formula weight (M(a1)) of a moiety of the structural unit (a1) and an average formula weight (M(a2)) of a moiety of the structural unit (a2) in the block copolymer is within a range of 25,000 to 75,000; and $β \left(BCP\right) \geq 25 .$

11. The block copolymer according to claim 10, wherein the aliphatic diol has 3 or more and 10 or less carbon atoms in the main chain.

12. The block copolymer according to claim 10, wherein the branched chain of the aliphatic diol is a methyl group.

13. The block copolymer according to claim 10, wherein the aliphatic dicarboxylic acid has 4 or more and 12 or less carbon atoms.

14. The block copolymer according to claim 10, the block copolymer having a number-average molecular weight of 28,750 or more and 400,000 or less.

15. The block copolymer according to claim 10, wherein a content of the block (B) is 5 mass% or more and 95 mass% or less when a sum of the block (A) and the block (B) is 100 mass%.

16. A resin composition comprising the block copolymer according to any one of claims 10 to 15.

17. The resin composition according to claim 16, further comprising a polyester resin (D).

18. A molded object of the resin composition according to claim 16.

19. A method for producing a block copolymer, the block copolymer containing a first block (A) derived from an aliphatic polyester containing a structural unit (a1) derived from an aliphatic diol having an alkyl group as a branched chain and 3 or more carbon atoms in a main chain and a structural unit (a2) derived from an aliphatic dicarboxylic acid, and a second block (B) derived from a polylactic acid containing a structural unit derived from lactic acid, and satisfying three conditions: a condition 1(BCP), a condition 2(BCP), and a condition 3(BCP):
Condition 1(BCP): α(BCP) and β(BCP) below satisfy a relational expression (III) below: $α \left(BCP\right) / \left(150-β\left(BCP\right)\right) \geq 575$ (II) wherein α(BCP) is a number-average molecular weight of the block copolymer, β(BCP) is a terminal OH group ratio (mol%) of the block copolymer, and represents a ratio (percentage) of the number of terminal OH groups when a total number of terminal groups of the block copolymer is 100 mol%;
Condition 2(BCP): a sum (M(a)) of an average formula weight (M(a1)) of a moiety of the structural unit (a1) and an average formula weight (M(a2)) of a moiety of the structural unit (a2) in the block copolymer is within a range of 25,000 to 75,000; and $β \left(BCP\right) \geq 25 ,$ wherein the second block (B) derived from a polylactic acid containing a structural unit derived from lactic acid is formed on the first block (A) derived from the aliphatic polyester produced by allowing a first aliphatic polyester containing the structural unit (a1) and the structural unit (a2) and at least one selected from the group consisting of a second aliphatic dicarboxylic acid (z1), an aliphatic dicarboxylic acid alkyl ester (z2), and an aliphatic dicarboxylic acid anhydride (z3) to react with each other, through direct condensation of lactic acid or ring-opening polymerization of lactide so that the second block (B) is bonded to the first block (A).
